# EUROPEAN PATENT SPECIFICATION

(11) **EP 1 323 775 B1**
(45) Date of publication and mention of the grant of the patent: **30.04.2008**
(21) Application number: 01965558.8
(22) Date of filing: 06.09.2001
(51) Int. Cl.: C08L 9/00, C08L 7/00, C08L 13/00, C08J 3/22

(54) **DIENE RUBBER/INORGANIC COMPOUND COMPOSITE AND METHOD FOR PRODUCING THE SAME AND RUBBER COMPOSITION**
VERBUNDSTOFF AUS DIENKAUTSCHUK UND ANORGANISCHER VERBINDUNG UND VERFAHREN ZU DESSEN HERSTELLUNG UND KAUTSCHUKZUSAMMENSETZUNG
COMPOSITE A BASE DE CAOUTCHOUC DIENIQUE ET DE MATIERE MINERALE, PROCEDE DE PRODUCTION DE CE COMPOSITE ET COMPOSITION DE CAOUTCHOUC

(30) Priority: 06.09.2000 JP 2000270834; 28.12.2000 JP 2000403360; 28.12.2000 JP 2000403361
(43) Date of publication of application: 02.07.2003
(73) Proprietor: JSR Corporation, Tokyo 104-0045 (JP); Bridgestone Corporation, Tokyo 104-0031 (JP)
(72) Inventor: KONNO, Tomohisa, Chuo-ku, Tokyo 104-8410 (JP); UDAGAWA, Yoshiyuki, Chuo-ku, Tokyo 104-8410 (JP); TADAKI, Toshihiro c/o JSR CORPORATION, Chuo-ku, Tokyo 104-8410 (JP); KONDO, Hajime, Kodaira-shi, Tokyo 187-0031 (JP); YANAGISAWA, Kazuhiro, Kodaira-shi, Tokyo 187-0031 (JP)
(74) Representative: Whalley, Kevin
(86) International application number: PCT/JP2001/007743
(87) International publication number: WO 2002/020655

(56) References cited:
- WO-A-97/36957
- JP-A- 50 052 145
- JP-A- 62 256 835
- US-A- 2 485 287
- US-A- 2 616 860
- US-A- 3 122 518

## Description

This invention relates to a diene-based rubber-inorganic compound composite material and a method of producing the same and a rubber composition containing such a composite material, and more particularly to a rubber composition uniformly dispersing inorganic compound particles therein and capable of providing a rubber article having excellent wear resistance and tensile strength. Especially, the invention is utilized in not only a rubber for a tire such as a tire tread or the like but also various rubber articles such as belts rubber rolls hoses and so on.

Recently, there is proposed a method wherein an inorganic filler such as silica or the like is used or the inorganic filler and carbon black are used together as a reinforcing agent in a rubber composition for a tire. A tire tread made of a rubber composition containing the inorganic filler or the inorganic filler and carbon black has a low rolling resistance and an excellent steering stability represented by a wet skid resistance. However, there is a problem that wear resistance, tensile strength and so on of a vulcanized rubber are poor.

Especially, when silica is applied as an inorganic filler, in order to enhance an affinity with a conjugated diene rubber, it is examined to use a conjugated diene rubber introduced with a functional group having an affinity with silica up to now. For instance, there are proposed a hydroxyl group-introduced conjugated diene rubber (WO96/23027 an alkoxysilyl group-introduced conjugated diene rubber (JP-A-9-208623), and an alkoxysilyl group and amino group or hydroxyl group-introduced conjugated diene rubber (JP-A-9-208633). However, most kinds of the conjugated diene rubbers introduced with these functional groups have strong interaction with silica, so that they have problems that when being mixed with silica, a poor dispersion of silica is caused, and heat generation in processing is large, and the processability is poor and so on.

Particularly, when the conjugated diene rubber is milled with the inorganic filler in a dry process to make a rubber composition, the inorganic filler is not sufficiently dispersed into the rubber and hence there is a problem that sufficiently improved properties such as wear resistance and the like are not obtained.

On the other hand, JP-A-59-49247 and so on propose a method wherein carbon black is compounded and dispersed in an aqueous dispersion containing rubber such as a latex or the like dispersed therein and then coagulated to prepare a carbon black master batch in order to simplify a milling step with carbon black as a reinforcing agent or improve dispersion into rubber. Also, it is attempted to prepare a master batch of silica according to this method, but it is not practically easy to obtain a uniform master batch because silica having a large hydrophilic nature is hardly agglomerated and only the rubber component is preferentially agglomerated and precipitated.

Further, it is known to obtain a rubber composition by applying only powder of aluminium hydroxide as a reinforcing filler for rubber instead of silica or carbon black and milling with rubber component in a dry process (see Prior art in JP-A-2000-204197). However, such a rubber composition has a problem that the wear resistance is poor.

As an improvement of the rubber composition, there are also known (1) application of a combination of silica and/or carbon black and aluminium hydroxide (JP-A-2000-204197, JP-A-2000-302914), and (2) application of a combination of silica and aluminium hydroxide, magnesium hydroxide and so on (JP-A-11-181155). Even in these cases, however, powders of starting materials are milled in a dry process to prepare a rubber composition, so that there is a problem that sufficient wear resistance and tensile strength are not necessarily obtained because aluminium hydroxide and so on are not sufficiently dispersed.

The present invention solves the aforementioned problems of the conventional techniques and aims to provide a diene-based rubber-inorganic compound composite material obtained through a step of mixing an aqueous dispersion containing a diene-based rubber dispersed therein with an aqueous dispersion of an inorganic compound as particularly defined, and a rubber composition containing such a composite material and uniformly dispersing the inorganic compound and capable of producing a rubber article having excellent wear resistance and tensile strength.

Attention is also drawn to the disclosure of DE-878705.

According to the invention, there is provided a method of producing a diene-based rubber-inorganic compound composite material which comprises a step of mixing an aqueous dispersion of a diene-based rubber with an aqueous dispersion of an inorganic compound selected from the group consisting of alumina, alumina monohydrate, aluminium hydroxide, magnesium oxide, magnesium hydroxide, aluminium magnesium oxide, titanium white and titanium black; or with an aqueous solution of an inorganic salt capable of forming said inorganic compound; or with a solution of an organometallic compound capable of forming said inorganic compound; so that the diene-based rubber in an aqueous dispersed state is mixed with the inorganic compound in an aqueous dispersed state.

The invention also extends to a diene-based rubber-inorganic compound composite material prepared by the method according to the invention as defined above.

The invention also provides a rubber composition comprising a diene-based rubber-inorganic compound composite material prepared by the method according to the invention as defined above, and a cross-linking agent.

The "diene-based rubber" used in the invention is a rubber having a conjugated diene-based monomer unit as a monomer unit constituting rubber and is not particularly limited, but includes natural rubber, butadiene rubber, isoprene rubber, styrene-butadiene copolymer rubber, butadiene-isoprene copolymer rubber, butadiene-styrene-isoprene copolymer rubber, acrylonitrile-butadiene copolymer rubber, acrylonitrile-styrene-butadiene copolymer rubber, chloroprene rubber and so on. Among these rubbers, a rubber obtained by polymerizing a conjugated diene monomer and, if necessary, an aromatic vinyl monomer, and an olefinic unsaturated nitrile monomer through an emulsion polymerization is particularly preferable, which can include an emulsion-polymerized butadiene rubber, an emulsion-polymerized styrene-butadiene copolymer rubber, an emulsion-polymerized acrylonitrile-butadiene copolymer rubber and an emulsion-polymerized acrylonitrile-styrene-butadiene copolymer rubber. Also, the diene-based rubber may be an oil-extended type or a non-oil extended type.

As the "aqueous dispersion of diene-based rubber" used in the invention, a diene-based rubber latex obtained by the emulsion polymerization is preferable This diene-based rubber latex is a dispersion of diene-based rubber particles into an aqueous medium and includes a natural rubber latex, an emulsion obtained by again emulsifying a diene-based synthetic rubber, a diene-based synthetic rubber emulsion produced by polymerizing in an aqueous medium, a dispersion of a diene-based synthetic rubber and so on. These latexes may be used alone or in a combination of two or more, irrespective of the kind of the diene-based rubber or the kind of the aqueous dispersion.

As the conjugated diene monomer (hereinafter referred to as "conjugated diene"), mention may be made of 1,3-butadiene, 2,3-dimethyl-1,3-butadiene, 2-chloro-1,3-butadiene, 1,3-pentadiene, isoprene and the like. Among them, 1,3-butadiene and isoprene are preferable, and 1,3-butadiene is more preferable. These conjugated dienes may be used alone or in a combination of two or more.

As the aromatic vinyl monomer are used aromatic vinyl compounds having no polar group, which include, for example, styrene, α-methylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene, monochlorostyrene, dichlorostyrene, monofluorostyrene and so on. Among them, styrene is preferable. The aromatic vinyl compounds may be used alone or in a combination of two or more.

As the olefinic unsaturated nitrile monomer, mention may be made of (meth)acrylonitrile, vinylidene cyanide and so on: These monomers having nitrile group may be used alone or in a combination of two nr more.

Also, the diene-based rubber may be a diene-based rubber having a polar group of a heteroatom. This is preferable in view of the dispersibility of the inorganic compound and the reinforcing effect.

The heteroatom are atoms belonging to 2nd to 4th Periods and Group 5B or 6B in the Periodic Table, which include nitrogen atom, oxygen atom, sulfur atom, phosphorus atom, silicon atom and so on. Among them, nitrogen atom, oxygen atom and so on are preferable. As the polar group containing such a heteroatom, mention may be made of a hydroxyl group, an alkoxysilyl group, an epoxy group, a carboxyl group, a carbonyl group, an oxycarbonyl group, a sulfide group, a disulfide group, a sulfonyl group, a sulfinyl group, a thiocarbonyl group, an imino group, an amino group, a nitrile group, an ammonium group, an imido group, an amido group, a hydrazo group, an azo group, a diazo group, an oxygen-containing heterocyclic group, a nitrogen-containing heterocyclic group, a sulfur-containing heterocyclic group and so on. Among them, the hydroxyl group, carboxyl group, epoxy group, sulfide group, sulfonyl group amino group, nitrogen-containing heterocyclic group and alkoxysilyl group are preferable and the hydroxyl group, amino group, carboxyl group, nitrogen-containing heterocyclic group and alkoxysilyl group are more preferable and the hydroxyl group or amino group is most preferable.

The vinyl monomer having the above polar group is not particularly limited and may be a polymerizable monomer having at least one polar group in its molecule. There are mentioned a hydroxyl group-containing vinyl monomer, an amino group-containing vinyl monomer, a nitrile group-containing vinyl monomer, a carboxyl group-containing vinyl monomer, an alkoxysilyl group-containing vinyl monomer and so on. Among them, the carboxyl group-containing vinyl monomer, alkoxysilyl group-containing vinyl monomer and amino group-containing vinyl monomer and so on are preferable. These polar group-containing vinyl monomers may be used alone or in a combination of two or more.

As the hydroxyl group-containing vinyl monomer among these polar group-containing vinyl monomers, mention may be made of polymerizable monomers having at least one primary, secondary or tertiary hydroxyl group in their molecules. As the hydroxyl group-containing vinyl monomer, there are mentioned, for example, a hydroxyl group-containing unsaturated carboxylic acid monomer, a vinyl ether monomer, vinyl ketone monomer and the like, among which the hydroxyl group-containing unsaturated carboxylic acid monomer is preferable. As the hydroxyl group-containing unsaturated carboxylic acid monomer, mention may be made of derivatives, esters, amides, anhydrides and the like of acrylic acid, methacrylic acid, itaconic acid, fumaric acid, maleic acid and so on, among which ester compounds of acrylic acid, methacrylic acid and so on are preferable.

As examples of the hydroxyl group-containing polymerizable monomer, mention may be made of hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate and so on; mono(meth)acrylates of polyalkylene glycols (number of alkylene glycol units is, for example, 2-23) such as polyethylene glycol, polypropylene glycol and so on; hydroxyl group-containing unsaturated amides such as N-hydroxymethyl (meth)acrylamide, N,N-bis(2-hydroxyethyl) (meth)acrylamide and so on; hydroxyl group-containing vinyl aromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene, p-vinylbenzyl alcohol and so on; (meth)allyl alcohol and the like. Among them, the hydroxyalkyl (meth)acrylates and the hydroxyl group-containing vinyl aromatic compounds are preferable. These hydroxyl group-containing polymerizable monomers may be used alone or in a combination of two or more.

As the nitrile group-containing polymerizable monomer, mention may be made of (meth)acrylonitrile, vinylidene cyanide and so on. These nitrile group-containing vinyl monomers may be used alone or in a combination of two or more.

As the amino group-containing vinyl monomer, mention may be made of polymerizable monomers having at least one amino group selected from primary, secondary and tertiary amino groups in their molecules. Among them, tertiary amino group-containing vinyl monomers (dialkylaminoalkyl (meth)acrylates, tertiary amino oup-containing vinylaromatic compounds and so on) are particularly preferable. These amino group-containing vinyl monomers may be used alone or in a combination of two or more.

As the primary amino group-containing vinyl monomer, mention may be made of acrylamide, methacrylamide, p-aminostyrene, aminomethyl (meth)acrylate, aminoethyl (meth)acrylate, aminopropyl (meth)acrylate, aminobutyl (meth)acrylate and so on.

As the secondary amino group-containing vinyl monomer, mention may be made of (1) anilinostyrenes such as anilinostyrene, β-phenyl-p-anilinostyrene, β-cyano-p-anilinostyrene, β-cyano-β-methyl-p-anilinostyrene, β-chloro-p-anilinostyrene, β-methyl-β-methoxycarbonyl-p-anilinostyrene, β-carboxy-p-anilinostyrene, β-rnethoxycarbonyl-p-anilinostyrene, β-(2-hydroxyethoxy) carbonyl-p-anilinostyrene, β-formyl-p-anilinostyrene, β-formyl-β-methyl-p-anilinostyrene, α-carboxy-β-carboxy-β-phenyl-p-anilinostyrene and so on; (2) anilinophenyl butadienes such as anilinophenyl butadiene and its derivatives, for example, 1-anilinophenyl-1,3-butadiene, 1-anilinophenyl-3-methyl-1,3-butadiene, 1-anilinophenyl-3-chloro-1,3-butadiene, 3-anilinophenyl-2-methyl-1,3-butadiene, 1-anilinophenyl-2-chloro-1,3-butadiene, 2-anilinophenyl-1,3-butadiene, 2-anilinophenyl-3-methyl-1,3-butadiene, 2-anilinophenyl-3-chloro-1,3-butadiene and so on; (3) N-monosubstituted (meth)acrylamides such as N-methyl (meth)acrylamide, N-ethyl (meth)acrylamide, N-methylol acrylamide, N-(4-anilinophenyl) methacrylamide and so on.

As the tertiary amino group-containing vinyl monomer, mention may be made of N,N-disubstituted aminoalkyl acrylates, N,N-disubstituted aminoalkyl acrylamides, N,N-disubstituted aminoaromatic vinyl compounds, pyridine group-containing vinyl compounds and so on.

As the N,N-disubstituted aminoacrylate, mention may be made of N,N-dimethylaminomethyl (meth)acrylate, N,N-dimethylaminoethyl (meth)acrylate, N,N-dimethylaminopropyl (meth)acrylate, N,N-dimethylaminobutyl (meth)acrylate, N,N-diethylaminoethyl (meth)acrylate, N,N-diethylaminopropyl (meth)acrylate, N,N-diethylaminobutyl (meth)acrylate, N-methyl-N-ethylaminoethyl (meth)acrylate, N,N-dipropylaminoethyl (meth)acrylate, N,N-dibutylaminoethyl (meth)acrylate, N,N-dibutylaminopropyl (meth)acrylate, N,N-dibutylaminobutyl (meth)acrylate, N,N-dihexylaminoethyl (meth)acrylate, N,N-dioctylaminoethyl (meth)acrylate; and esters of acrylic acid or methacrylic acid such as acryloylmorpholine and so on. Among them, N,N-dimethylaminoethyl (meth)acrylate, N,N-diethylaminoethyl (meth)acrylate, N,N-diproprylaminoethyl (meth)acrylate, N,N-dioctylaminoethyl (meth)acrylate, N-methyl-N-ethylaminoethyl (meth)acrylate and so on are preferable.

As the N,N-disubstituted aminoalkyl acrylamide, mention may be made of acrylamide compounds and methacrylamide compounds such as N,N-dimethylaminomethyl (meth)acrylamide, N,N-dimethylaminoethyl (meth)acrylamide, N,N-dimethylaminopropyl (meth)acrylamide, N,N-dimethylaminobutyl (meth)acrylamide, N,N-diethylaminoethyl (meth)acrylamide, N,N-diethylaminopropyl (meth)acrylamide, N,N-diethylaminobutyl (meth)acrylamide, N-methyl-N-ethylaminoethyl (meth)acrylamide, N,N-dipropylaminoethyl (meth)acrylamide, N,N-dibutylaminoethyl (meth)acrylamide, N,N-dibutylaminopropyl (meth)acrylamide, N,N-dibutylaminobutyl (meth)acrylamide, N,N-dihexylaminoethyl (meth)acrylamide, N,N-dihexylaminopropyl (meth)acrylamide, N,N-dioctylaminopropyl (meth)acrylamide and so on. Among them, N,N-dimethylaminopropyl (meth)acrylamide, N,N-diethylaminopropyl (meth)acrylamide, N,N-dioctylaminopropyl (meth)acrylamide and so on are preferable.

As the N,N-disubstituted aminoaromatic vinyl compound, mention may be made of styrene derivatives such as N,N-dimethylanlinoethyl styrene, N,N-diethylaminoethyl styrene, N,N-dipropylaminoethyl styrene, N,N-dioctylaminoethyl styrene and so on.

Also, a nitrogen-containing heterocyclic group may be used instead of the amino group. As a nitrogen-containing heterocycle, mention may be made of pyrrole, histidine, imidazole, triazolidine, triazole, triazine, pyridine, pyrimidine, pyrazine, indole, quinoline, purine, phenadine, pteridine, melamine and so on. The nitrogen-containing heterocycle may contain the other heteroatom in its ring. As the pyridyl group-containing vinyl compound, mention may be made of 2-vinylpyridine, 3-vinylpyridine, 4-vinylpyridine, 5-methyl-2-vinylpyridine, 5-ethyl-2-vinylpyridine and so on. Among them, 2-vinylpyridine and 4-vinylpyridine are preferable.

As the epoxy group-containing polymerizable monomer, mention may be made of (meth)allylglycidyl ether, glycidyl (meth)acrylate, 3,4-oxycyclohexyl (meth)acrylate and so on. These epoxy group-containing monomers may be used alone or in a combination of two or more.

As the carboxyl group-containing polymerizable monomer, mention may be made of unsaturated carboxylic acids such as (meth)acrylic acid, maleic acid, fumaric acid, itaconic acid, tetraconic acid, cinnamic acid and so on; non-polymerizable polyvalent carboxylic acids such as phthalic acid, succinic acid, adipic acid and so on; free carboxyl group-containing esters and salts thereof such as monoesters with a hydroxyl group-containing unsaturated compound such as (meth)acryl alcohol, 2-hydroxyethyl (meth)acrylate and the like. Among them, the unsaturated carboxylic acids are preferable. These carboxyl group-containing monomers may be used alone or in a combination of two or more.

As the alkoxysilyl group-containing polymerizable monomer, mention may be made of (meth)acryloxymethyl methoxysilane, (meth)acryloxymethylmethyl dimethoxysilane, (meth)acryloxymethyldimethyl methoxysilane, (meth)acryloxymethyl triethoxysilane, (meth)acryloxymethylmethyl diethoxysilane, (meth)acryloxymethyldimethyl ethoxysilane, (meth)acryloxymethyl tripropoxysilane, (meth)acryloxymethylmethyl dipropoxysilane, (meth)acryloxymethyldimethyl propoxysilane, γ-(meth)acryloxypropyl trimethoxysilane, γ-(meth)acryloxypropylmethyl dimethoxysilane, γ-(meth)acryloxypropyldimethyl methoxysilane, γ-(meth)acryloxypropyl triethoxysilane, γ-(meth)acryloxypropylmethyl diethoxysilane, γ-(meth)acryloxypropyldimethyl ethoxysilane, γ-(meth)acryloxypropyl tripropoxysilane, γ-(meth)acryloxypropylmethyl dipropoxysilane, γ-(meth)acryloxypropyldimethyl propoxysilane, γ-(meth)acryloxypropylmethyl diphenoxysilane, γ-(meth)acryloxypropyldimethyl phenoxysilane, γ-(meth)acryloxypropylmethyl dibenzyloxysilane, γ-(meth)acryloxypropyldimethyl benzyloxysilane and so on. Also, the alkoxysilyl group-containing vinyl monomer includes, for example, trimethoxyvinyl silane, triethoxyvinyl silane, 6-trimethoxysilyl-1,2-hexene, p-trimethoxysilyl styrene and so on as disclosed in JP-A-7-188356. These alkoxysilyl group-containing monomers may be used alone or in a combination of two or more.

A bonding amount of the monomer in the diene-based rubber is properly selected in accordance with the required characteristics. The bonding amount of the conjugated diene monomer is usually 40-100 mass%, preferably 50-90 mass%, more preferably 60-85 mass%, and the bonding amount of the aromatic vinyl monomer is usually 0-60 mass%, preferably 10-50 mass%, more preferably 15-40 mass%. Also, when the diene-based rubber is made of a monomer containing a heteroatom-containing polar group, the bonding amount of the polar group-containing monomer is properly selected in accordance with the magnification of the polarity, but is usually 0.01-20 mass%. When the bonding amount of the polar group-containing monomer is less than 0.01 mass%, even if the monomer has a large polarity, the interaction with the inorganic compound is small and it is difficult to obtain the sufficient effect. While, when it exceeds 20 mass%, strong aggregation with the inorganic compound is caused to make the processing difficult. When using a copolymer rubber latex containing each of the monomers in the bonding amount of the aforementioned range, there is obtained a rubber composition having highly balanced properties of wear resistance and further lower heat build-up property and wet skid resistance.

The polymerization method for the diene-based rubber is not particularly limited and includes a radical polymerization method, an anionic polymerization method, a coordination anionic polymerization method, a cationic polymerization method and the like. As the radical polymerization method, there are a mass polymerization method, a suspension polymerization method, an emulsion polymerization method and the like. Particularly preferable is an emulsion polymerization method wherein a stable emulsified dispersion is provided at the completion of the polymerization because a diene-based rubber latex is used. In this emulsion polymerization can be used a usual polymerization method, which includes a method wherein a given monomer(s) is emulsified in an aqueous medium in the presence of an emulsifier and then polymerization is started through a radical polymerization initiator and stopped through a short-stop after a given conversion is obtained, and so on.

As the emulsifier, mention may be made of an anionic surfactant, a nonionic surfactant, a cationic surfactant, an amphoteric surfactant and so on. Also, a fluorine-based surfactant may be used. These emulsifiers may be used alone or in a combination of two or more. Usually, the anionic surfactant, for example, a long-chain aliphatic acid salt having a carbon number of not less than 10, a rosinate or the like is frequently used. Mention may be made of potassium salts, sodium salts and the like of capric acid, lauric acid, myristic acid, palmitic acid, oleic acid and stearic acid.

As the radical polymerization initiator, use may be made of organic peroxides such as benzoyl peroxide, lauroyl peroxide, tert-butyl hydroperoxide, cumene hydroperoxide, paramenthane hydroperoxide, di-tert-butyl peroxide, dicumyl peroxide and the like. Also, there may be used diazo compounds exemplified by azobisisobutyronitrile, inorganic peroxides exemplified by potassium persulfate, redox catalysts exemplified by a combination of the peroxide and ferrous sulfate, and so on. These radical polymerization initiators may be used alone or in a combination of two or more.

Also, a chain transfer agent may be used for adjusting a molecular weight of the diene-based rubber. As the chain transfer agent, use may be made of alkyl mercaptans such as tert-dodecyl mercaptan, n-dodecyl mercaptan and the like; carbon tetrachloride, thioglycols, diterpene, terpinolene, γ-terpinene and so on.

In the polymerization for the diene-based rubber, each of the monomers, the emulsifier, the radical polymerization initiator and the chain transfer agent may be charged into a reaction vessel at once to start polymerization, or may be continuously or intermittently added in the continuation of the reaction. Such a polymerization can be carried out at 0-100°C by using, for example, an oxygen-removed reaction vessel, and particularly it is preferable to conduct the polymerization at a polymerizing temperature of 0-80°C. During the polymerization reaction, operating conditions such as temperature, stirring and the like may be changed properly. The polymerization system may be continuous or batch. Furthermore, there may be adopted a method wherein a part of the monomer, radical polymerization initiator, chain transfer agent or the like is added at a specified conversion.

Moreover, as the conversion becomes large, a tendency of gelation is recognized, so that it is preferable to control the conversion within 80%, and particularly it is preferable to stop the polymerization when the conversion is within a range of 30-70%. Stopping the polymerization is carried out by adding a short-stop when a given conversion is obtained. As the short-stop are used an amine compound such as hydroxylamine, diethyl hydroxylamine or the like; a quinone compound such as hydroquinone or the like; and so on. After stopping the polymerization, a diene-based rubber latex to be used in the invention can be obtained by removing unreacted monomers through a method such as steam distillation or the like, if necessary.

The diene-based rubber latex can be used by dispersing an extender oil for rubber. The extender oil for rubber is not particularly limited, so that a process oil such as naphtenic, paraffinic or aromatic oil can be used. An amount of the extender oil for rubber dispersed in the diene-based rubber latex is preferably 5-100 parts by mass, particularly 10-60 parts by mass based on 100 parts by mass of a diene-based rubber included in the diene-based rubber latex.

The diene-based rubber used in the invention preferably has a Moony viscosity [ML₁₊₄(100°C)] of 10-200, particularly 30-150. When the Moony viscosity is less than 10, the properties inclusive of wear resistance are insufficient, while when it exceeds 200, the processability is poor and the milling is difficult. The Moony viscosity may be a value of a rubber without the extender oil or a rubber with the extender oil.

As the inorganic compound to be mixed with the diene-based rubber, there is used alumina (Al₂O₃) such as γ-alumina, α-alumina or the like; an alumina monohydrate (Al₂O₃·H₂O) such as boehmite, diaspore or the like; aluminium hydroxide (Al(OH)₃) such as gibbsite, bayerite or the like; magnesium oxide (MgO); magnesium hydroxide (Mg(OH)₂); aluminium magnesium oxide (MgO·Al₂O₃); titanium white (TiO₂) such as rutile, anatase or the like; or titanium black (TiO₂ₙ₋₁).

The inorganic compound used in the invention preperably has a particle size of not more than 10 µm, more preferably not more than 3 µm. As the particle size of the inorganic compound becomes large, it tends to degrade fatigue resistance and wear resistance of rubber.

Moreover, powdery inorganic compounds used in the invention may be used alone or in an admixture of two or more.

An amount of the inorganic compound introduced into the diene-based rubber-inorganic compound composite material obtained by the method of the invention is preferably within a range of 5-200 parts by mass per 100 parts by mass of the diene-based rubber in the composite material. When the introduction amount is less than 5 parts by mass, the improvement of gripping performance on wet road surface is hardly obtained, while when the introduction amount exceeds 200 parts by mass, there are caused problems that the dispersibility of the inorganic compound into the diene-based rubber is degraded and the composite material becomes considerably hard and the production of the composite material is difficult and the like.

The "dispersion of inorganic compound" in the invention may be one obtained by dispersing the aforementioned inorganic compound into an aqueous medium such as water or the like through stirring. For instance, the inorganic compound, for example, commercially available powder of alumina (Al₂O₃) such as γ-alumina, α-alumina or the like; an alumina monohydrate (Al₂O₃·H₂O) such as boehmite, diaspore or the like; aluminum hydroxide (Al(OH)₃) such as gibbsite, bayerite or the like; magnesium oxide (MgO); magnesium hydroxide (Mg(OH)₂); aluminium magnesium oxide (MgO·Al₂O₃); titanium white (TiO₂) such as rutile, anatase or the like; or titanium black (TiO₂ₙ₋₁), can be finely dispersed into the aqueous medium such as water or the like through shear stirring. In this case, there can be used, for example, a colloid mill, an oscillation mill, a homogenizer, a dyno mill, a tube mill, a super-mill or the like.

Also, the "dispersion of inorganic compound" may be prepared by adding an acid or an alkali to an aqueous solution of an inorganic salt capable forming the inorganic compound as defined above. As suitable preparation methods for the dispersion of the inorganic compound, (1) a compound obtained by gelating a basic aluminium salt through heating and neutralizing with a base, or (2) an alumina gel obtained by adding and neutralizing with an aluminium salt such as aluminium chloride and an aluminate, or (3) a precipitate of aluminium hydroxide formed by reacting an aluminate with a mineral acid or the like or reacting an aluminium salt such as aluminium sulfate with an alkali such as caustic soda or the like can be finely dispersed into an aqueous medium such as water or the like through shear stirring likewise the above case.

The inorganic salt is not particularly limited provided it can form the inorganic compound as defined above, and may be at least one inorganic salt selected from the group consisting of metal salts and oxo acid salts of metals. For instance, there are mentioned (1) aluminum salts such as aluminium chloride, aluminium nitrate, aluminium sulfate, basic aluminium chloride, basic aluminum sulfate, aluminum polychloride and the like; (2) magnesium chloride (hexahydrate), magnesium nitrate (hexahydrate), magnesium sulfate, titanium trichloride, titanium tetrachloride and the like; (3) an aluminate (oxo acid salt of aluminum) such as sodium aluminate, and so on. Then, an aqueous solution of the inorganic salt is prepared and, if necessary, a pH of the aqueous solution is adjusted with a mineral acid or an alkali, and mixed with the diene-based rubber latex. Such compounds may be used alone or in an admixture of two or more.

Also, an alumina sol prepared by deflocculating an alumina gel made from sodium aluminate, aluminium sulfate or the like through a method as disclosed in JP-B-40-8409 or the like can be used as an aqueous dispersion.

Furthermore, the "dispersion of inorganic compound" can be prepared by adding water, an acid or an alkali to a solution of an organic metal compound capable of forming the inorganic compound as defined above. As the organic metal compound, mention may be made of various metal alkoxides such as triethoxy aluminium, tripropoxy aluminium, diethoxy magnesium, dipropoxy magnesium, tetraethoxy titanium and tetrapropoxy titanium, or organic metal compounds wherein at least one of the alkoxides is substituted with a hydrolyzable halogen such as chlorine or the like, and alkylsilicates and so on. Also, the solution of the organic metal compound is mainly a solution dissolved in an organic solvent. As the organic solvent, it is preferable to use a water-soluble methanol, ethanol, isopropanol, ethylene glycol, dimethyl acetoamide, methyl ethyl ketone or the like. The inorganic compound can be formed by reacting the solution of the organic metal compound with water to hydrolyze the organic metal compound or by condensing the resulting hydrolyzate. In the reaction between the organic metal compound and water, an acid or an alkali may be added alone or as an aqueous solution, if necessary, in order to promote condensation reaction. Also, the solution of the organic metal compound may be mixed with an aqueous solution of the above inorganic salt to prepare a dispersion of an inorganic compound.

In addition, the "dispersion of inorganic compound" can be prepared by adding and reacting an alkali (for example, aqueous solution of sodium hydroxide or the like) to a metal which is aluminium, magnesium or titanium. In this case, one metal may be used, or two or more metals may be used.

Next, the above aqueous dispersion of the inorganic compound is mixed with an aqueous dispersion of the diene-based rubber. The term "aqueous dispersion" used herein means that the rubber component or the inorganic compound is not necessarily required to be completely dissolved in water and includes a mixed solution after the emulsion polymerization, or a colloidal solution of the inorganic compound.

Especially, the aqueous dispersion of the inorganic compound preferably has a pH of 8.5-11 or 2-4. In this case, it is desirable to readjust the pH before the formation of the rubber composition by mixing with the other compounding chemicals and the like.

Also, silicon salt (silicon chloride or the like) and/or oxo acid salt of silicon (silicate of sodium silicate) can be added to the aqueous dispersion. In this case, the silicate and aluminium salt or aluminate may be mixed as the same aqueous solution with the latex or may be prepared into separate aqueous solutions and mixed with the latex.

In any case, the diene-based rubber-inorganic compound composite material according to the invention can be produced by mixing the dispersion of the diene-based rubber with the dispersion of the inorganic compound, or through a step of mixing the aqueous dispersion of the diene-based rubber with the aqueous solution of the inorganic salt capable of forming the inorganic compound or the solution of the organic metal compound capable of forming the inorganic compound as mentioned above.

Then, the diene-based rubber-inorganic compound composite material is usually taken out from a mixture of the aqueous dispersion of the diene-based rubber and the aqueous dispersion of the inorganic compound or the aqueous solution of the inorganic compound. As a method:of taking out the diene-based rubber-inorganic compound composite material from a mixed solution of the aqueous dispersion of the diene-based rubber and the aqueous dispersion of the inorganic compound or the aqueous solution of the inorganic compound, there can be used a method wherein it is taken out as a coagulated mass likewise a general coagulation method, or a method wherein the aqueous medium is removed by a method such as heating, pressure reducing or the like. The former method is preferable in that a more uniform diene-based rubber-inorganic compound composite material can be obtained. In each of these methods, pH of the mixed solution may be previously adjusted, if necessary. Also, an emulsified mass of an extender oil for rubber usually used may be mixed to take out an oil-extended rubber-inorganic compound composite material.

As the coagulation method, for example, the diene-based rubber-inorganic compound composite material can be coagulated as a crumb by adding (1) sodium chloride, potassium chloride which are components constituting an electrolyte, (2) a salt of a polyvalent metal such as calcium, magnesium, zinc, aluminium or the like, e.g. calcium chloride, magnesium chloride, zinc chloride, aluminium chloride, calcium nitrate, magnesium nitrate, zinc nitrate, aluminium nitrate, magnesium sulfate, zinc sulfate, aluminium sulfate or the like, and/or, if necessary, (3) hydrochloric acid, nitric acid, sulfuric acid or the like. Among them, the salt of the polyvalent metal such as calcium, magnesium, aluminium or the like is preferable, and calcium chloride, magnesium chloride and magnesium sulfate are particularly preferable. They may be used alone or in a combination of two or more.

In this case, fine inorganic compound may be flocculated by using a polymer flocculating agent (particularly anionic and nonionic among anionic, nonionic and cationic). Particularly, temperature, pH and the like are not limited when the diene-based rubber-inorganic compound composite material is coagulated as a crumb or co-coagulated, but it is preferable that in order to reduce inorganic salt remaining in the resulting diene-based rubber-inorganic compound composite material, the temperature is controlled above 10°C and the pH value is controlled to a range of 2-14 (particularly acidic side, e.g. pH = 3-6).

A method of drying a coagulated mass after the diene-based rubber and the inorganic compound are co-coagulated is not particularly limited. For example, there is a method wherein the coagulated mass is washed with water to remove the emulsifier, the electrolyte and the like and then subjected to a hot drying, a drying under vacuum or the like to remove water. In this way can be produced a composite material wherein the inorganic compound is uniformly dispersed in the diene-based rubber. As the method of removing the aqueous medium from the mixture, there are mentioned a method wherein the mixed solution is subjected to a cast drying and dried under vacuum, a drying method through a drum dryer and so on.

When the diene-based rubber-inorganic compound composite material produced by the method of the invention is put into a practical use, it is usually compounded with a crosslinking agent including a vulcanizing agent and the like to form a rubber composition, and may be further compounded with another rubber component, a reinforcing filler, another filler, a coupling agent, a vulcanization accelerator, an aliphatic acid and the like.

The crosslinking agent to be compounded in the rubber composition according to the invention includes a vulcanizing agent such as sulfur, other sulfur-containing compound or the like, or a crosslinking agent containing no sulfur such as a peroxide or the like, but the vulcanizing agent, particularly sulfur is preferable. The crosslinking agent is preferably compounded in an amount of 0.5-10 parts by mass, preferably 1-6 parts by mass based on 100 parts by mass of the rubber component.

The other rubber component to be compounded in the rubber composition according to the invention is not particularly limited, but includes styrene-butadiene copolymer rubber, butadiene rubber, isoprene rubber, butadiene-isoprene copolymer rubber, butadiene-styrene-isoprene copolymer rubber, acrylonitrile-butadiene copolymer rubber, acrylonitrile-styrene-butadiene copolymer rubber, acrylic rubber, butyl rubber, natural rubber, chloroprene rubber and so on. Further, the diene-based rubber having a heteroatom-containing functional group used in the invention can be additionally used as the other rubber component.

As the reinforcing filler, mention may be made of carbon black, silica and inorganic fillers represented by the above formula (I). As the carbon black, there are channel black, furnace black, acetylene black, thermal black and so on in accordance with production methods, all of which blacks can be used. The carbon black preferably has a nitrogen adsorption specific surface area (BET value) of not less than 70 m²/g and a dibutyl phthalate absorption (DBP) of not less than 90 ml/100 g.

When the BET value is less than 70 m²/g, it is difficult to obtain a sufficient wear resistance, and as the BET value becomes too large, low fuel consumption property tends to be degraded. Considering the wear resistance and low fuel consumption property, a more preferable range of the BET value is 90-180 m²/g. Moreover, the BET value is a value measured according to ASTM D3037-88. On the other hand, when the DBP value is less than 90 ml/100 g, sufficient wear resistance is hardly obtained, and as the DBP value becomes too large, elongation at break of the rubber composition is degraded. Considering the wear resistance and low fuel consumption property, a more preferable range of the DBP value is 100-180 ml/100 g. Moreover, the DBP value is a value measured according to JIS K6221-1982 (method A).

The silica is not particularly limited and can be used by properly selecting from those usually used for the reinforcement of rubber such as dry-process silica, wet-process silica (precipitated silica) and so on, but the wet-process silica is preferable. The silica preferably has a nitrogen adsorption specific surface area (BET value) of 100-300 m²/g considering the wear resistance and low fuel consumption property. Moreover, the BET value is a value measured according to ASTM D4820-93 after being dried at 300°C for 1 hour.

In the invention, only the carbon black may be used, or only the silica may be used, or the carbon black and the silica may be used together. Also, an amount of the reinforcing filler compounded is preferably within a range of 5-85 parts by mass based on 100 parts by mass of the rubber component from a viewpoint of the balance among the wear resistance, wet performances and low fuel consumption and so on.

As the other filler, mention may be made of calcium carbonate, magnesium carbonate and so on.

A coupling agent is not particularly limited, but a silane coupling agent is preferable. As the silane coupling agent, mention may be made of vinyl trichlorosilane, vinyl triethoxysilane, vinyl tris(β-methoxy-ethoxy) silane, β-(3,4-epoxycyclohexyl)-ethyl trimethoxysilane, γ-glycidoxypropyl trimethoxysilane, γ-glycidoxypropylmethyl diethoxysilane, γ-methacryloxypropyl trimethoxysilane, N-(β-aininoethyl)-γ-ariúnopropyl trimethoxysilane, N-(β-aminoethyl)-γ-aminopropyl trimethyl dimethoxysilane, N-phenyl-γ-aminopropyl trimethoxysilane, γ-chloropropyl trimethoxysilane, γ-mercaptopropyl trimethoxysilane, γ-aminopropyl trimethoxysilane, bis(3-(triethoxysilyl)propyl) tetrasulfide, bis(3-(triethoxysilyl)propyl) disulfide, γ-trimethoxysilyl propyl dimethyl thiocarbamyl tetrasulfide, γ-trimethoxysilyl propyl benzothiazyl tetrasulfide and so on. As the coupling agent is compounded, the wear resistance or tan δ is more improved. The amount of the coupling agent compounded is preferably not more than 20 parts by mass, particularly not more than 15 parts by mass (usually not less than 1 part by mass) based on 100 parts by mass of the inorganic compound included in the rubber composition or 100 parts by mass in total of the inorganic compound and the inorganic filler additionally compounded such as the reinforcing filler or the like.

As the vulcanization accelerator, use may be made of an aldehyde ammonia system, a guanidine system, a thiourea system, a thiazol system, a dithiocarbamic acid system and so on. It is preferably compounded in an amount of 0.5-15 parts by mass, particularly 1-10 parts by mass based on 100 parts by mass of the rubber component.

The aliphatic acids include an aliphatic acid, an ester compound thereof and so on. As the aliphatic acid, a higher aliphatic acid is preferable and is usually a monocarboxylic acid having a carbon number of not less than 10 (preferably not less than 12, usually not more than 20), which may be a saturated aliphatic acid or an unsaturated aliphatic acid, but the saturated aliphatic acid is preferable in view of weather resistance. As such an aliphatic acid, mention may be made of palmitic acid, stearic acid, oleic acid, linolic acid, linolenic acid and so on.

As the ester compound of the aliphatic acid, an ester of an alcohol compound with the above higher aliphatic acid is preferable. The carbon number of the alcohol compound is not particularly limited, but it is usually about 1-10. Also, an ester of a lower aliphatic acid (carbon number of about 1-10) with a higher alcohol (carbon number of not less than about 10 but not more than about 20) may be used.

The rubber composition according to the invention may be further compounded with an extender oil for rubber such as naphthenic, paraffinic, aromatic process oils and the like. As the extender oil, the aromatic or naphthenic process oil is preferable. Furthermore, zinc oxide, an accelerator activator, an antioxidant, a processing aid and the like may be compounded in proper-amounts.

A rubber article can be manufactured by using the rubber composition according to the invention as follows. That is, the diene-based rubber-inorganic compound composite material and, if necessary, the other rubber component, and the reinforcing agent such as silica, carbon black, carbon-silica dual phase filler or the like, the extender oil for rubber, and the other compounding agents are first milled at a temperature of 70-180°C by using a milling machine such as a Banbury mixer or the like. Thereafter, the milled mass is cooled and further compounded with a vulcanizing agent such as sulfur or the like, a vulcanization accelerator and so on in a Banbury mixer, a mixing roll or the like and then shaped into a given form. Then, the thus shaped body is cured at 140-180°C to obtain a required rubber vulcanizate or a rubber article.

This rubber vulcanizate has excellent tensile strength, wear resistance, wet skid resistance, rebound resilience and the like. Also an uncured rubber has a good processability. Therefore, the rubber compositions according to the invention can be used as a rubber article in various fields owing to its excellent properties. For example, they can be used for a tread, a base tread, a sidewall, an abrasion and the like of tires for large-size vehicles and passenger cars; industrial goods such as a rubber roll, a rice husking roll, a belt, a hose, a sponge, a rubber sheet, a rubberized cloth and the like; footwear members such as transparent shoes, general-purpose colour shoes, a sponge shoe bottom and the like; sanitary goods such as a sanitary skin, medical supplies and so on. They are particularly suitable as a tire tread for an automobile.

The invention will be further described with respect to the following examples below.

### 1. Synthesis of diene-based rubber (extended with an oil and not extended with oil)

### (1) Synthesis of oil-extended diene-based rubber

Into a polymerization vessel purged with nitrogen are charged 200 parts by mass of water, 4.5 parts by mass of rosin acid soap, given compounding amounts of butadiene and other monomers shown in Table 1 (unit is parts by mass, provided that a total amount of monomers is 100 parts by mass), and 0.3 part by mass of t-dodecylmercaptan. Thereafter, a temperature of the polymerization vessel is set to 5°C, and 0.1 part by mass of p-menthane hydroperoxide as a polymerization initiator, 0.07 part by mass of sodium ethylenediamine tetraacetate, 0.05 part by mass of ferrous sulfate heptahydrate and 0.15 part by mass of sodium formaldehyde sulphoxylate are added to start polymerization, and when a conversion reaches 60%, diethylhydroxyamine is added to stop the polymerization. Then, unreacted monomers are recovered by steam stripping to obtain each aqueous dispersion of diene-based rubbers having a solid content of about 21 %.

Thereafter, each aqueous dispersion of the diene-based rubber is mixed with an emulsified mass containing 37.5 parts by mass of an aromatic oil (made by Fuji Kosan Co., Ltd. trade name "Fukkol·Aromax#3") based on 100 parts by mass of the solid content in the dispersion and coagulated with sulfuric acid and sodium chloride to form a crumb, which is washed with water and dried in a hot dryer to obtain an oil-extended diene-based rubber (A to J in Table 1). The monomer bonding content (bonding contents of styrene, monomer containing carboxylic acid group, monomer containing amino group and nitrile group, monomer containing hydroxyl group, butyl acrylate and monomer containing alkoxysilyl group) and Mooney viscosity of the oil-extended diene-based rubbers (A to J in Table 1, which are shown by "Polymer" in Tables 6-13) are measured by the following methods to obtain results as shown in Table 1.
(a) Bound styrene content (mass%); It is measured from a calibration curve prepared by an infrared absorption spectroscopy.
(b) Contents of 1,2-vinyl bond and 1,4-trans bond of butadiene unit (mass%); They are measured by an infrared absorption spectroscopy (Morello's method).
(c) Bonding content of monomer containing carboxylic acid group (mass%); It is measured by neutralization titration after the rubber is dissolved in toluene and purified by subjecting to reprecipitation with methanol two times and dried under vacuum and then the rubber is dissolved in chloroform.
(d) Bonding content of monomer containing amino group and nitrile group (mass%); It is measured from a nitrogen content through an elementary analysis after the rubber is dissolved in toluene and purified by subjecting to reprecipitation with methanol two times and dried under vacuum.
(e) Bonding content of monomer containing hydroxyl group (mass%); It is measured by ¹H-NMR at 270 MHz after the rubber is dissolved in toluene and purified by subjecting to reprecipitation with methanol two times and dried under vacuum.
(f) Bonding content of butyl acrylate (mass%); It is measured by ¹³C-NMR at 270 MHz after the rubber is dissolved in toluene and purified by subjecting to reprecipitation with methanol two times and dried under vacuum.
(g) Bonding content of monomer containing alkoxysilyl group (mass%); It is measured by ¹H-NMR at 270 MHz after the rubber is dissolved in toluene and purified by subjecting to reprecipitation with methanol two times and dried under vacuum.
(h) Mooney viscosity [ML₁₊₄(100°C)]; It is measured at a measuring temperature of 100°C according to JIS K6300-1994 after 4 minutes through a preliminary heating for 1 minute.

### (2) Synthesis of diene-based rubber (not extended with oil)

Into a polymerization vessel purged with nitrogen are charged 200 parts by mass of water, 4.5 parts by mass of rosin acid soap, given compounding amounts of butadiene and other monomers shown in Table 2 (unit is parts by mass, provided that a total amount of monomers is 100 parts by mass), and 0.3 part by mass of t-dodecylmercaptan. Thereafter, a temperature of the polymerization vessel is set to 5°C, and 0.1 part by mass of p-menthane hydroperoxide as a polymerization initiator, 0.07 part by mass of sodium ethylenediamine tetraacetate, 0.05 part by mass of ferrous sulfate heptahydrate and 0.15 part by mass of sodium formaldehyde sulphoxylate are added to start polymerization, and when a conversion reaches 60%, diethylhydroxyamine is added to stop the polymerization. Then, unreacted monomers are recovered by steam stripping to obtain each aqueous dispersion of diene-based rubbers having a solid content of 21 %.

Thereafter, each aqueous dispersion of the diene-based rubbers (K to T in Table 2) is coagulated with sulfuric acid and sodium chloride to form a crumb, which is dried in a hot dryer to obtain a diene-based rubber (K to T in Table 2, which are shown by "Polymer" in Tables 6-13). The bound styrene content and Mooney viscosity of the diene-based rubbers (K to T in Table 2) are measured by the aforementioned methods to obtain results as shown in Table 2.

### 2. Production of composite material

### (1) Use of aqueous dispersion of oil-extended diene-based rubber (A to J in Table 1)

Each of the aqueous dispersions of oil-extended diene-based rubbers (A to J in Table 1) is mixed with an emulsified mass containing 37.5 parts by mass of an aromatic oil based on 100 parts by mass of the solid content in the dispersion (Moreover, total amount of rubber and oil is 137.5 parts by mass, see Table 3). Furthermore, the mixture is mixed with an aqueous dispersion formed by dispersing 30 parts by mass of each of inorganic compounds shown in Table 5, 6, 7, 11 and 13 (aluminium hydroxide, alumina monohydrate and so on) in 200 parts by mass of water in a homomixer. Moreover, the compounding method and compounding ratio of the rubber and the inorganic compound are shown by compounding recipe A and compounding recipe D in Table 3, wherein the kind of the inorganic compound used is shown in Tables 6 and 7 (compounding recipe A) and Table 11 (compounding recipe D) and Table 13 (compounding recipe A and D).

Then, the resulting mixture is coagulated with calcium chloride to form a crumb while adjusting pH to 4-5 with sulfuric acid, which is washed with water and dried in a hot dryer to obtain an oil-extended diene-based rubber-inorganic compound composite material (composite materials of various combinations shown in Tables 3, 6, 7 and 13).

The thus obtained composite material is ashed by heating in an electric furnace at 640°C for 8 hours. An introduction amount of the inorganic compound calculated from the resulting ash content is 30 parts by mass in either compounding recipe A and D as converted into the inorganic compound based on 100 parts by mass of the diene-based rubber (see compounding recipe A and D in Table 3).

### (2) Use of aqueous dispersion of diene-based rubber not extended with oil (K to T in Table 2)

The same procedure as in the above case (1) is repeated except that 37.5 parts by mass of the aromatic oil used in the above case (1) of the aqueous dispersion of the oil-extended diene-based rubber is not used and the inorganic compound is used in an amount of 20 parts by mass or 50 parts by mass (see Table 3) to obtain non oil-extended diene-based rubber-inorganic compound composite materials (composite materials of various combinations shown in compounding recipe B and C in Table 3, Tables 8, 9 (compounding recipe B), Table 10 (compounding recipe C) and Table 13 (compounding recipe B and C)).

Furthermore, composite materials shown in Table 3 (compounding recipe E) and Tables 12 and 13 (compounding recipe E) are produced by the same manner as mentioned above in case of diene-based rubbers (not extended with oil) made of E-BR and NR. In these composite materials, the introduction amount of the inorganic compound calculated from the ash content is shown in Table 3.

### (3) Case through in-Situ ①

The aqueous dispersion of the diene-based rubber (A to T in Tables 1 and 2) is mixed with an emulsified mass containing 37.5 parts by mass of an aromatic oil based on 100 parts by mass of the solid content in the dispersion or a dispersion omitting the oil. Further, it is mixed with a given amount of an aqueous solution of 20 mass% sodium aluminate (compounding recipe A and D: 110 parts by mass, compounding recipe B: 75 parts by mass, compounding recipe C: 185 parts by mass, compounding recipe E: 105 parts by mass) (see Tables 6, 8, 10-13).

Then, the resulting mixture is coagulated with aluminium sulfate to form a crumb while adjusting pH to 4-5 with sulfuric acid, which is washed with water and dried in a hot dryer to obtain an oil-extended or non oil-extended diene-based rubber-inorganic compound composite material (see compounding recipe A to D in Table 3, and Tables 6, 8, 10-13). The introduction amount of the inorganic compound calculated from the ash content of the resulting composite material is shown in Table 3 as converted by aluminium hydroxide (trade name, Higilite H-43M, made by Showa Denko Co., Ltd.).

### (4) Case through in-Situ ②

The aqueous dispersion of the diene-based rubber (A to T in Tables 1 and 2) is mixed with an emulsified mass containing 37.5 parts by mass of an aromatic oil based on 100 parts by mass of the solid content in the dispersion or a dispersion omitting the oil. Further, it is mixed with an aqueous solution formed by adding 180 parts by mass of sodium hydroxide to a given amount of an aqueous solution of 20 mass% sodium aluminate (compounding recipe A and D: 110 parts by mass, compounding recipe B: 75 parts by mass, compounding recipe C: 185 parts by mass, compounding recipe E: 105 parts by mass) and adjusting pH to 14 (see Tables 6, 8, 10-13).

Then, the resulting mixture is coagulated with aluminium sulfate to form a crumb while adjusting pH to 4-5 with sulfuric acid, which is washed with water and dried in a hot dryer to obtain an oil-extended or non oil-extended diene-based rubber-inorganic compound composite material (see compounding recipe A to D in Table 3, and Tables 6, 8, 10-13). The introduction amount of the inorganic compound calculated from the ash content of the resulting composite material is shown in Table 3 as converted by aluminum hydroxide (Higilite H-43M).

### 3. Rubber composition and evaluation of its properties

A comparison test is conducted between a case using the above produced composite material (Examples 1-175, see Tables 6-13) and a case of dry-milling starting components by the conventional method (Comparative Examples 1-115, see Tables 6-13). In each comparative example of the latter case, starting components shown in Table 4 (not composite material) are compounded and milled at two-stage step of first stage and second stage and cured to obtain a given rubber composition and a rubber article. Moreover, the following are used as a starting component shown in the same table. N339: trade name "Seast KH", carbon black, made by Tokai Carbon Co., Ltd. Silica: trade name "Nipsil AQ", made by Nippon Silica Industrial Co., Ltd. Aromatic oil: trade name "Fukkol·Aromax#3", made by Fuji Kosan Co., Ltd. 6C: trade name "Nocrac 6C", made by Ohuchi Shinko Chemical Industrial Co., Ltd.
Si69: trade name "Si69", made by Degusa AG
DPG: diphenylguanidien, trade name "Nocceler D", made by Ohuchi Shinko Chemical Industrial Co., Ltd.
DM: dibenzothiazyl disulfide, trade name "Nocceler DM", made by Ohuchi Shinko Chemical Industrial Co., Ltd.
NS: N-t-butyl-2-benzothiazoyl sulfenamide, trade name "Nocceler NS-F', made by Ohuchi Shinko Chemical Industrial Co., Ltd.

In each example of the former case, the same milling as in the above case is conducted by using each composite material shown in Table 3 (for example, a composite material made of 137.5 parts by mass of oil-extended diene-based rubber and 30 parts by mass of inorganic compound in compounding recipe A of Table 3 or the like) instead of diene-based rubber and inorganic compound shown in Table 4 (comparative example) (for example, a mixture of 137.5 parts by mass of oil-extended diene-based rubber and 30 parts by mass of inorganic filler in compounding recipe A of table 4). The milling method of first stage and second stage is as follows.

### (Milling method of first stage)

The above obtained diene-based rubber and diene-based rubber-inorganic compound composite material are used and milled with rubber ingredients (compounding agents) in a first column of Table 4 according to a compounding recipe of Table 4 in a laboratory plastomill (made by Toyo Seiki Seisakusho) at a maximum temperature of 160°C.

### (Milling method of second stage)

The thus obtained rubber composition is used and milled with rubber ingredients in a second column of Table 4. In this case, however, the milling is carried out in the same method as mentioned above except that a maximum temperature is 100°C.

The rubber composition obtained in the above method is cured at 160°C for 15 minutes to obtain a vulcanizate, and the following properties of the vulcanizate are evaluated to obtain results as shown in Tables 6-12 and Table 13 summarizing them.
① Tensile properties: A test piece of pattern No. 3 is used and a tensile strength Tb (MPa) is measured according to JIS K6251-1993 under conditions that a measuring temperature is 25°C and a tensile rate is 500 mm/min, and also a tensile stress (M₃₀₀) at an elongation of 300% is measured.
② Wear resistance: An abrasion loss is calculated at a slip rate of 25% by using a Lambourn abrasion tester. The measuring temperature is 25°C. A reciprocal of the abrasion loss is represented by an index on the basis that the comparative example is 100, wherein the larger the index value, the better the wear resistance.
③ Low heat build-up property: Tan δ (50°C) is measured at a temperature of 50°C and a strain of 5% and a frequency of 15 Hz by using a viscoelasticity measuring apparatus (made by Rheometrix). The smaller the tan δ (50°C), the lower the heat build-up property.
④ Rebound resilience: It is measured at a temperature of 25°C by a Dunlop tripsometer (BS903).

**Table 1**

| Oil-extended rubbers | | | | | | | | | | | |
|---|---|---|---|---|---|---|---|---|---|---|---|
| Oil-extended diene-based rubber | | A | E | B | C | D | F | G | H | I | J |
| Feed amount (part by mass) | butadiene | 58 | 66 | 57.5 | 57 | 57 | 57 | 57 | 51 | 56 | 57.5 |
| | styrene | 42 | 26 | 42 | 42 | 42 | 42 | 42 | 42 | 42 | 42 |
| | acrylonitrile | | 8 | | | | | | | | |
| | 2-hydroxyethyl methacrylate | | | 0.5 | | | | | | | |
| | diethylaminoethyl methacrylate | | | | 1 | | | | | | |
| | 4-vinylpyridine | | | | | 1 | | | | | |
| | methacrylic acid | | | | | | 1 | | | | |
| | itaconic acid | | | | | | | 1 | | | |
| | butyl acrylate | | | | | | | | 7 | | |
| | methacrylamide | | | | | | | | | 2 | |
| | γ-methacryloxypropyl methacrylate | | | | | | | | | | 0.5 |
| Bonding content (mass %) | styrene | 35 | 20 | 35 | 35 | 35 | 35 | 35 | 35 | 35 | 35 |
| | acrylonitrile | | 10 | | | | | | | | |
| | 2-hydroxyethyl methacrylate | | | 0.3 | | | | | | | |
| | diethylaminoethyl methacrylate | | | | 0.7 | | | | | | |
| | 4-vinylpyridine | | | | | 0.6 | | | | | |
| | methacrylic acid | | | | | | 0.8 | | | | |
| | itaconic acid | | | | | | | 0.6 | | | |
| | butyl acrylate | | | | | | | | 4 | | |
| | methacrylamide | | | | | | | | | 0.9 | |
| | γ-methacryloxypropyl methacrylate | | | | | | | | | | 0.4 |
| Extender oil (part by mass) | | 37.5 | 37.5 | 37.5 | 37.5 | 37.5 | 37.5 | 37.5 | 37.5 | 37.5 | 37.5 |
| Mooney viscosity after oil extension | | 50 | 52 | 48 | 51 | 52 | 49 | 48 | 53 | 51 | 52 |

**Table 2**

| Non-oil extended rubber | | | | | | | | | | | |
|---|---|---|---|---|---|---|---|---|---|---|---|
| Diene-based rubber | | K | N | L | M | O | P | Q | R | S | T |
| Feed amount (part by mass) | butadiene | 72 | 76 | 71.5 | 71 | 71 | 100 | 92 | 99.5 | 99 | 99 |
| | styrene | 28 | 16 | 28 | 28 | 28 | | | | | |
| | acrylonitrile | | 8 | | | | | 8 | | | |
| | 2-hydroxyethyl methacrylate | | | 0.5 | | | | | 0.5 | | |
| | diethylaminoethyl methacrylate | | | | 1 | | | | | 1 | |
| | itaconic acid | | | | | 1 | | | | | 1 |
| Bonding content (mass %) | styrene | 23.5 | 13 | 23.5 | 23.5 | 23.5 | 0 | 0 | 0 | 0 | 0 |
| | acrylonitrile | | 10 | | | | | 10 | | | |
| | 2-hydroxyethyl methacrylate | | | 0.3 | | | | | 0.3 | | |
| | diethylaminoethyl methacrylate | | | | 0.7 | | | | | 0.7 | |
| | itaconic acid | | | | | 0.6 | | | | | 0.6 |
| Mooney viscosity | | 50 | 48 | 47 | 51 | 48 | 48 | 50 | 50 | 52 | 49 |

**Table 3**

| Components constituting composite material/ compounding recipe | A | B | C | D | E |
|---|---|---|---|---|---|
| Diene-based rubber | | | | | |
| oil-extended diene based rubber A-J | 137.5 | | | 137.5 | |
| non-oil extended diene based rubber K-T | | 100 | 100 | | |
| E-BR | | | | | 70 |
| NR | | | | | 30 |
| Inorganic compound | 30 | 20 | 50 | 30 | 20 |

**Table 4**

| Milling stages | Compounding recipe | A | B | C | D | E |
|---|---|---|---|---|---|---|
| First stage | oil-extended diene-based rubber | 137.5 | | | 137.5 | |
| | non-oil extended diene based rubber | | 100 | 100 | | |
| | E-BR | | | | | 70 |
| | NR | | | | | 30 |
| | N339 | 60 | 40 | | 30 | 40 |
| | silica | | | | 30 | |
| | inorganic compound | 30 | 20 | 50 | 30 | 20 |
| | aromatic oil | | 10 | 10 | | 10 |
| | stearic acid | 2 | 2 | 2 | 2 | 2 |
| | 6C | 1 | 1 | 1 | 1 | 1 |
| | Si69 | | | | 3 | 1 |
| Second stage | ZnO | 3 | 3 | 3 | 3 | 3 |
| | DPG | 0.8 | 0.8 | 1.2 | 0.8 | 0.8 |
| | DM | 1 | 1 | 1.5 | 1 | 1 |
| | NS | 1 | 1 | 1 | 1 | 1 |
| | sulfur | 1.5 | 1.5 | 1.5 | 1.5 | 1.5 |
| unit: part by mass | | | | | | |

**Table 5**

| Chemical name | Maker | Trade mark | Average particle size (µm) |
|---|---|---|---|
| Aluminum hydroxide (gibbsite) | Showa Denko Co., Ltd. | Higilite H-43M | 0.6 |
| Alumina monohydrate (boehmite) | Condea Japan Co., Ltd. | PURAL200 PURAL200 | 0.14 |
| γ-alumina | Baikowski | Baikalox CR125 | 0.3 |
| Kaolin clay | J.M.HUBER | Polyfil DL | 1.0 |
| Calcined clay | J.M.HUBER | Polyfil 40 | 1.2 |
| Magnesium hydroxide | Kyowa Kagaku Kogyo Co., Ltd. | Kisma 5A | 0.8 |
| Titanium oxide (anatase) | Ishihara Sangyo Kaisha Ltd. | Tipaque A-100 | 0.15 |
| Aluminium hydroxide in situ ① | from sodium aluminate | | |
| Aluminium hydroxide in situ ② | from aluminum sulfate | | |

In Tables 6 to 12, the following Examples are outside the scope of the invention because they use Kaolin day or calcined day, which are not inorganic compounds as defined in the claims : that is, Examples 41-50, 86-95, and 151-155.

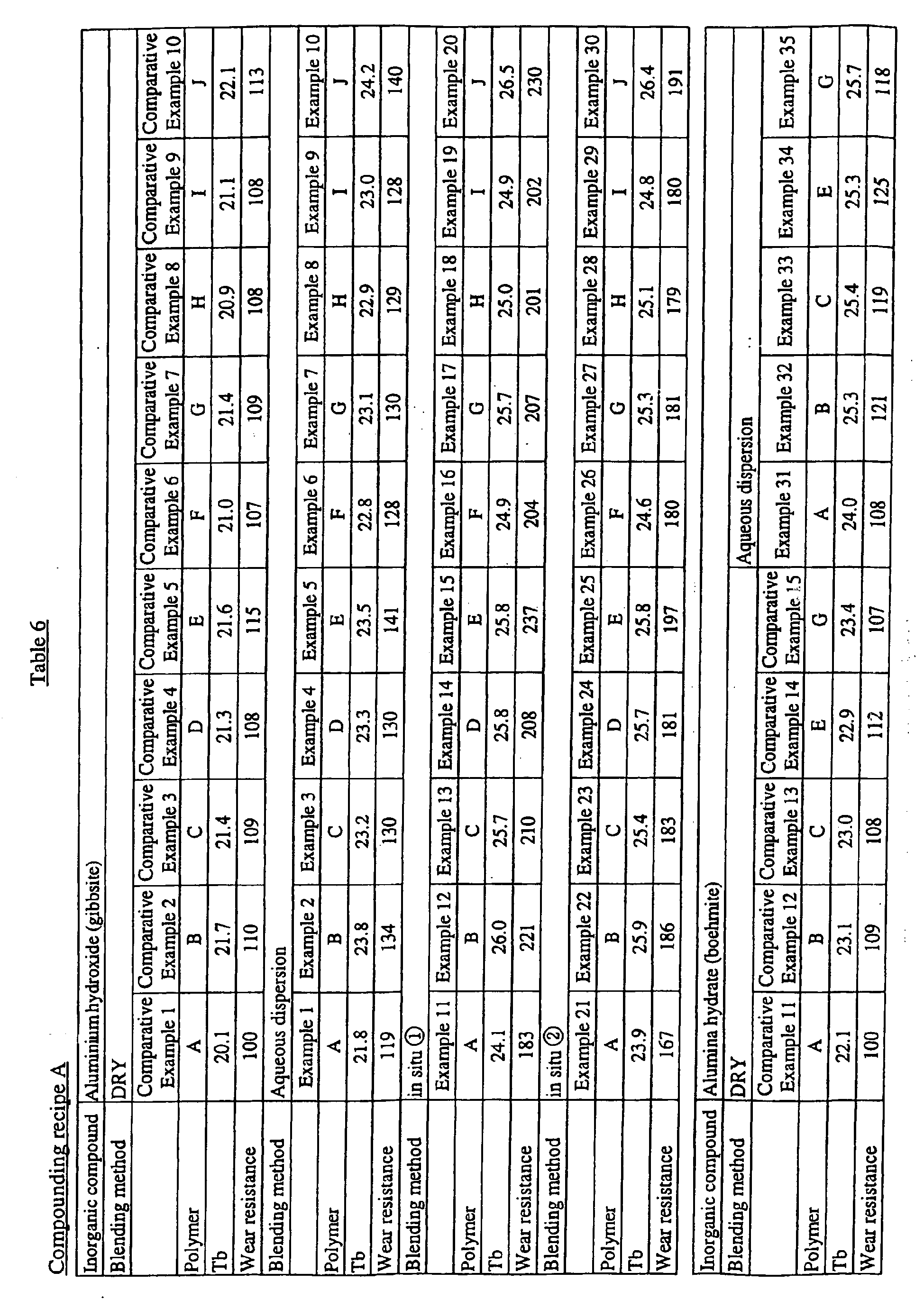

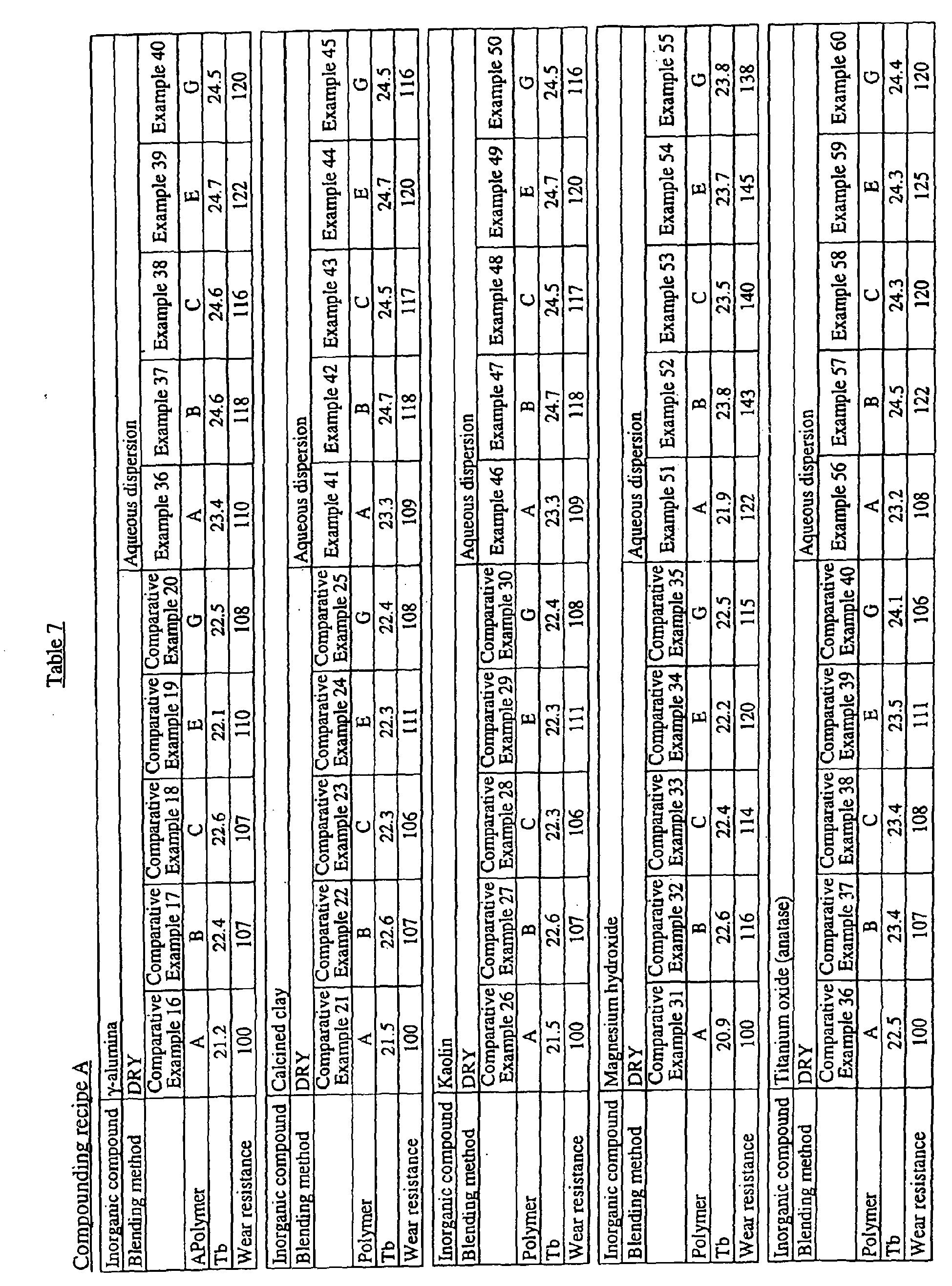

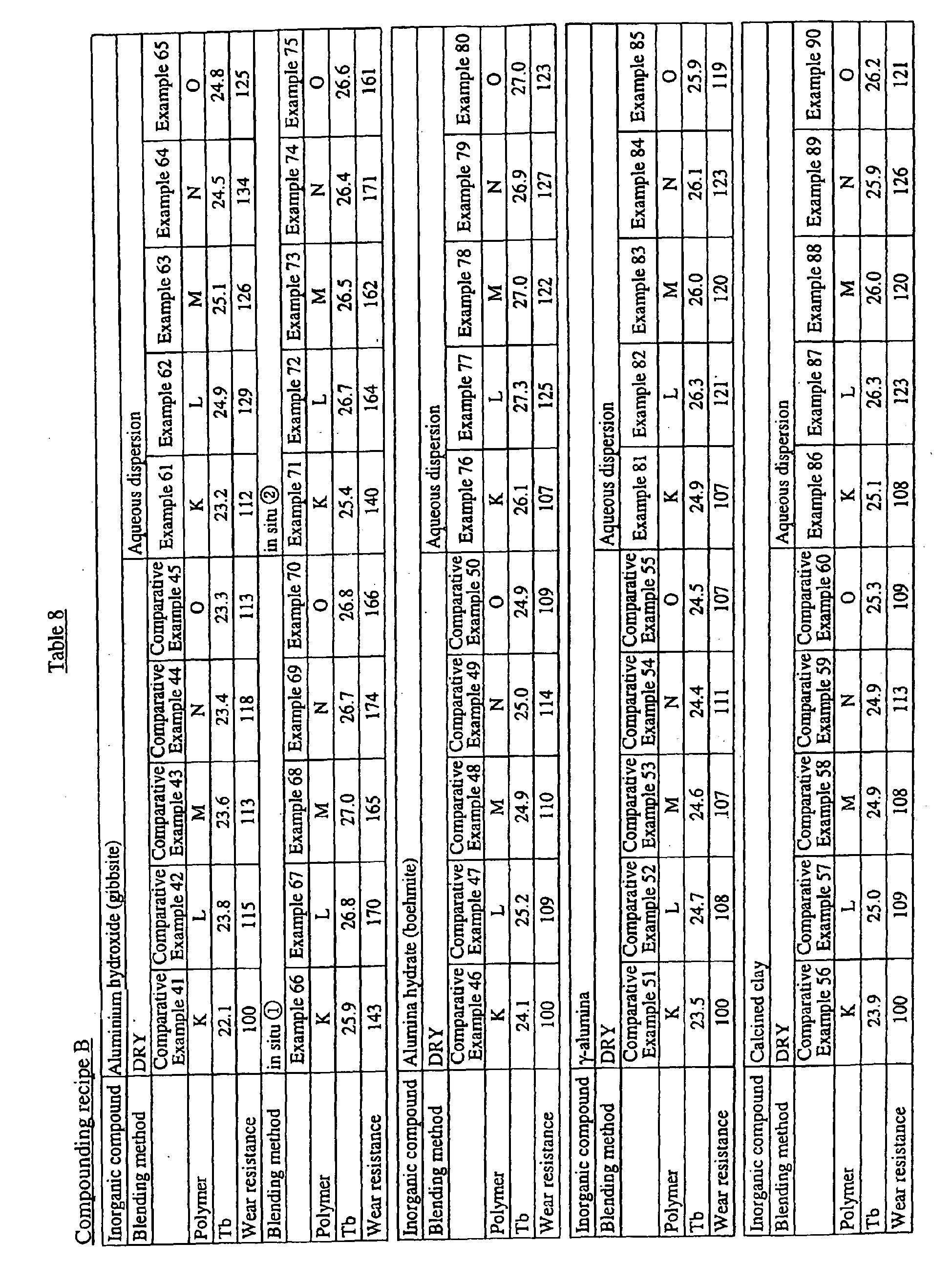

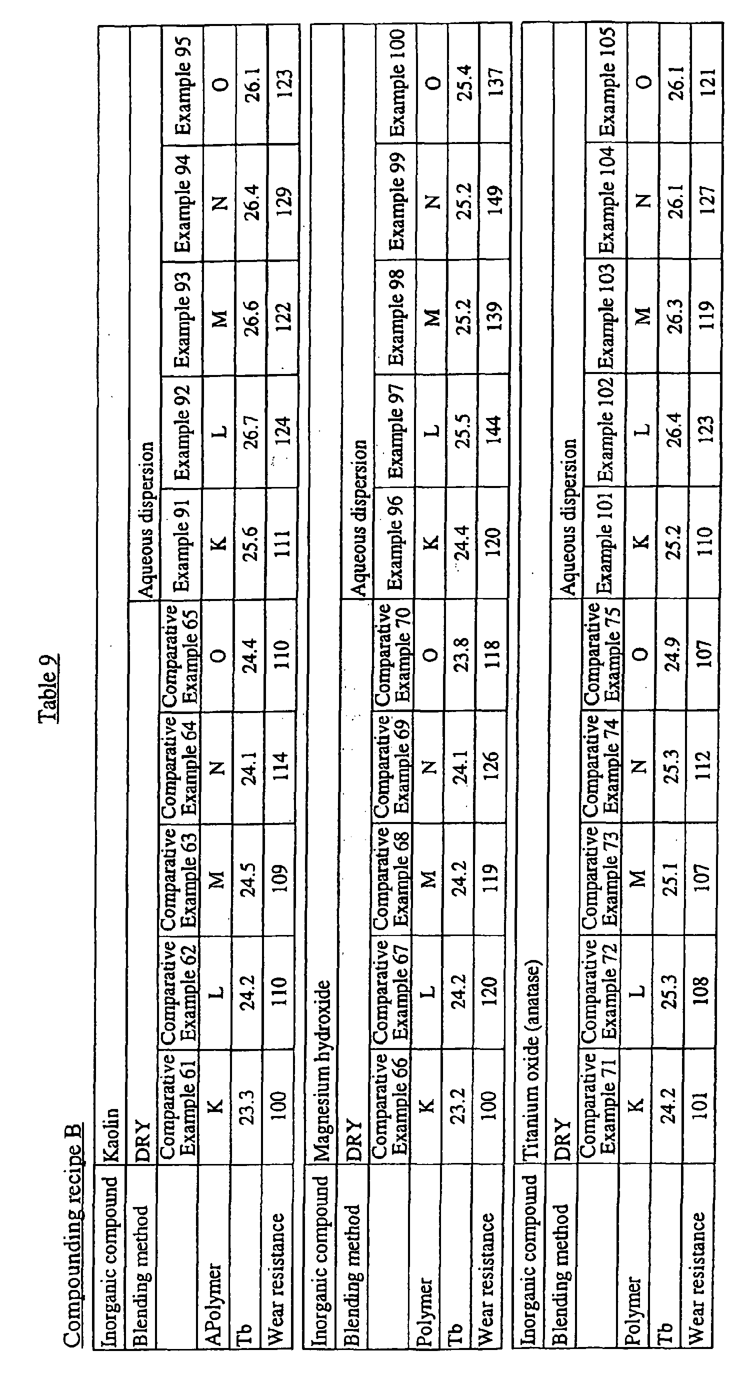

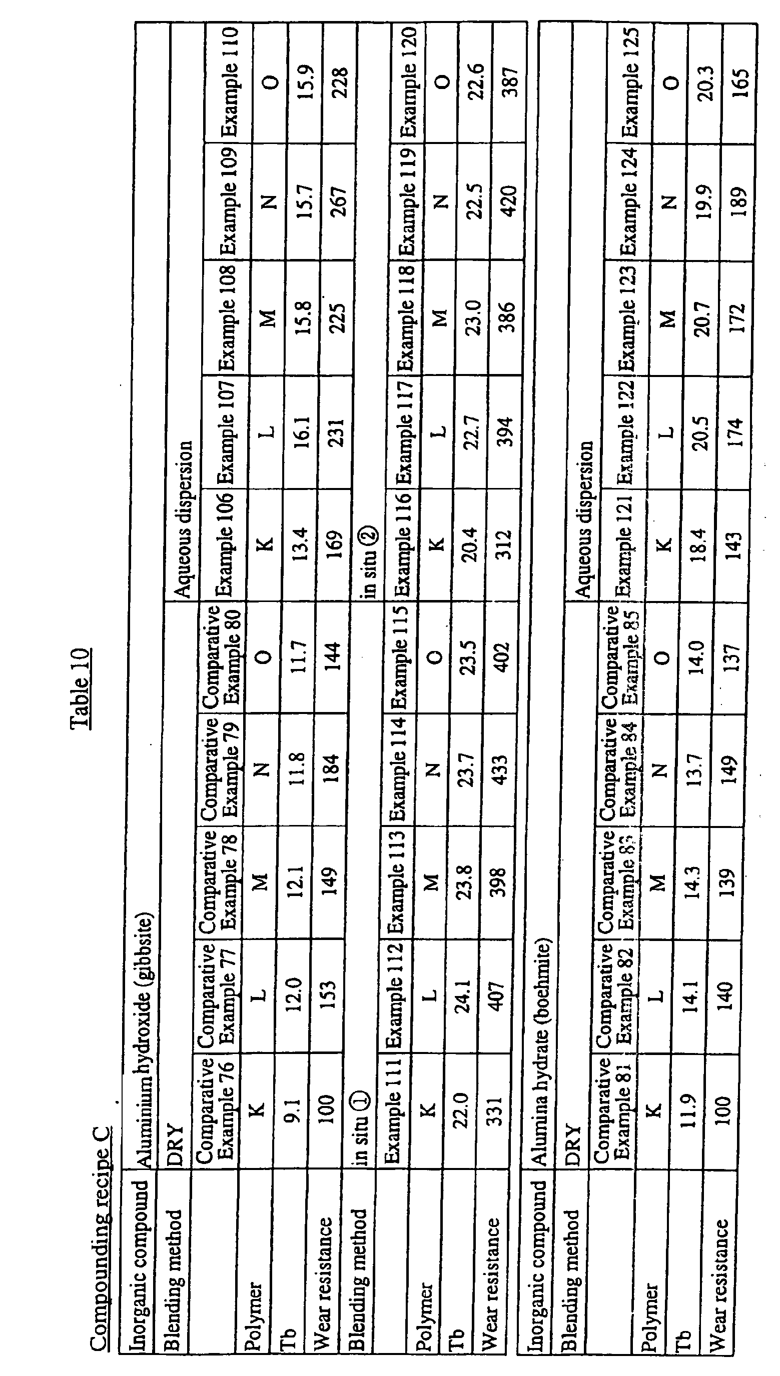

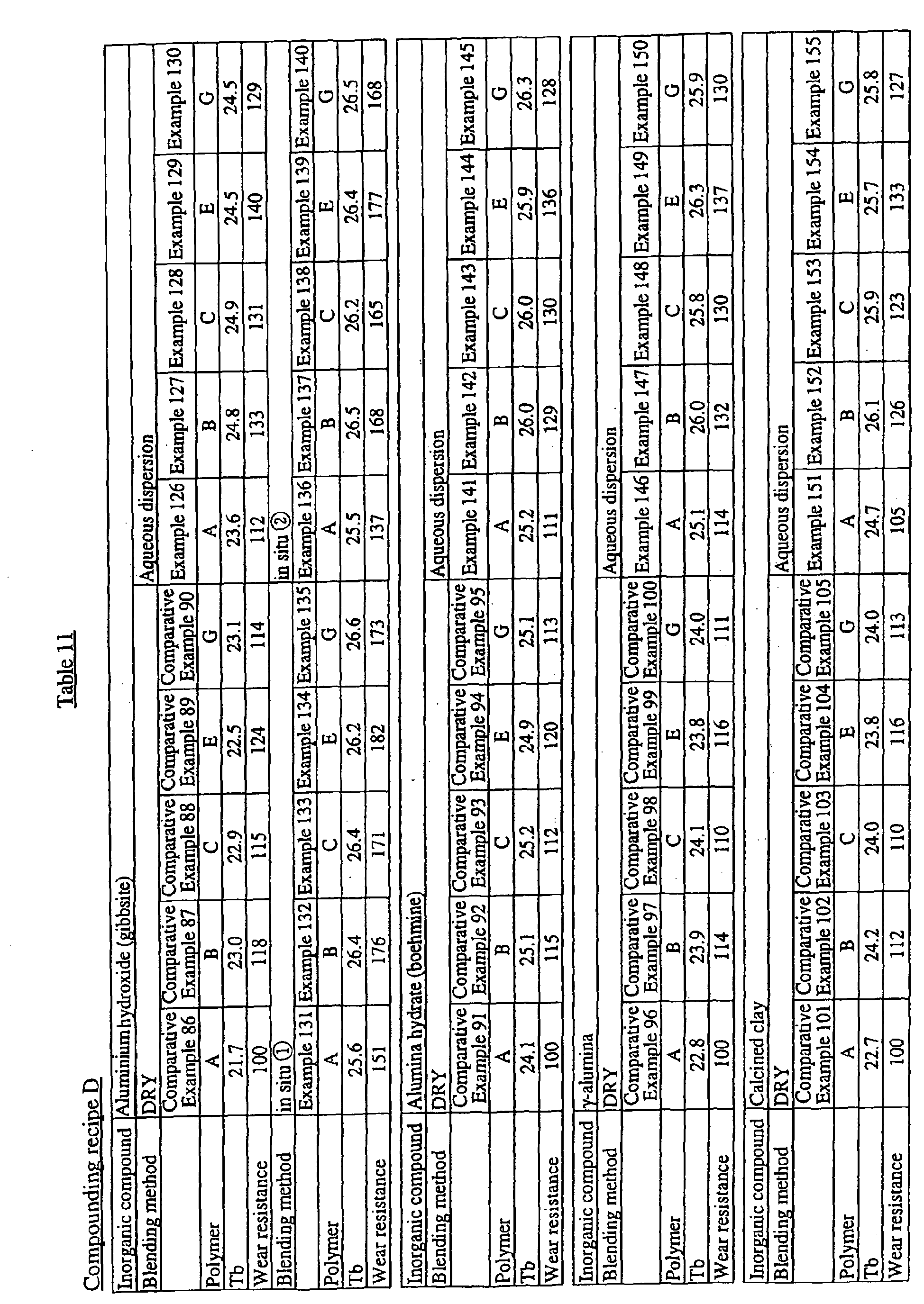

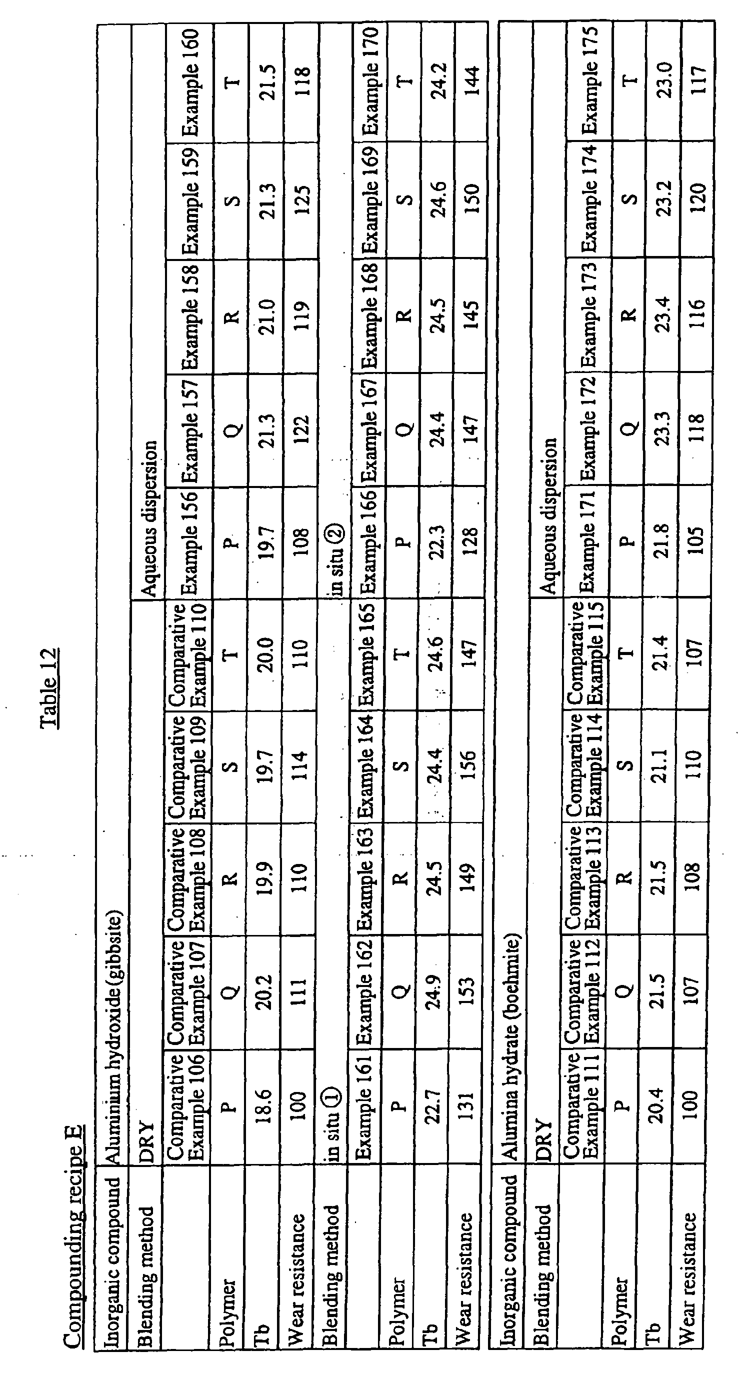

**Table 13**

| Inorganic compound | Gibbsite | | | | Boehmite | | γ-alumina | | Magnesium | | Anatase | |
|---|---|---|---|---|---|---|---|---|---|---|---|---|
| | DRY dispersion | aqueous | in situ ① | in situ ② | DRY | aqueous dispersion | DRY dispersion | aqueous | dispersion | DRY aqueous | DRY | aqueous dispersion |
| Compounding recipe A Polymer A Tb | 20.1 | 21.8 | 24.1 | 23.9 | 22.1 | 24.0 | 21.2 | 23.4 | 20.9 | 21.9 | 22.5 | 23.2 |
| Wear resistance | 100 | 119 | 183 | 167 | 100 | 108 | 100 | 110 | 100 | 122 | 100 | 108 |
| Compounding recipe B Polymer K Tb | 22.1 | 23.2 | 25.9 | 25.4 | 24.1 | 26.1. | 23.5 | 24.9 | 23.2 | 24.4 | 24.2 | 25.2 |
| Wear | 100 | 112 | 143 | 140 | 100 | 107 | 100 | 107 | 100 | 120 | 100 | 110 |
| Compounding recipe C Polymer K Tb | 9.1 | 13.4 | 22.0 | 20.4 | 11.9 | 18.4 | | | | | | |
| Wear resistance | 100 | 169 | 331 | 312 | 100 | 143 | | | | | | |
| Compounding recipe D Polymer A Tb | 21.7 | 23.6 | 25.6 | 25.5 | 24.1 | 25.2 | 22.8 | 25.1 | | | | |
| Wear resistance | 100 | 112 | 151 | 137 | 100 | 111 | 100 | 114 | | | | |
| Compounding recipe E Polymer P Tb | 18.6 | 19.7 | 22.7 | 22.3 | 20.4 | 21.8 | | | | | | |
| Wear resistance | 100 | 108 | 131 | 128 | 100 | 105 | | | | | | |

As shown in Tables 6-13, all examples have large Tb value (tensile strength) and wear resistance as compared with the corresponding comparative examples. Particularly, in case of in-Situ ① and ②, the value of Tb and wear resistance become larger, and it has been confirmed that the performances are generally excellent. And also, it is particularly seen from Table 13 that the tensile strength and wear resistance are considerably improved in gibbsite (aluminium hydroxide) among the given inorganic compounds as compared with dry-type milling (Comparative Examples). Moreover, it has been found that boehmite is particularly effective in improving the Tb value, and magnesium hydroxide is particularly effective in improving the wear resistance.

As mentioned above, in the vulcanized rubbers made of the rubber compositions each containing the composite according to the invention, the tensile strength and wear resistance are excellent and the dispersibility of the inorganic compound into the diene-based rubber composition and the vulcanized rubber is very good.

Then, an embodiment using alumina sol as an inorganic compound in the composite material will be described.

### (1) Production of SBR latex

As SBR latex used in the following examples and comparative examples, synthesis is carried out based on a cold recipe of E-SBR polymerization recipe examples in Table 10.1, page 300 of "Production Process of New Polymers" published by Kogyo Chosakai (edited by Yasuharu Saeki and Shinzo Omi). Moreover, monomers for SBR (BR) are charged at a ratio shown in Table 14 and reaction thereof is progressed at a polymerization temperature of 5°C. At a time that conversion reaches 60%, N,N-dimethyl dithiocarbamate is added to stop polymerization. Thereafter, SBR (BR) latex is obtained by recovering unreacted monomers through an evaporator.

### (2) Production of rubbery polymer

A part of the latex obtained in the above item (1) is sampled and coagulated with sulfuric acid and salt to form a crumb, and a solid matter is dried to obtain a rubbery copolymer. The microstructure and Mooney viscosity are measured with respect to this copolymer. The results are shown in Table 14.

**Table 14**

| Copolymer latex | | A | B | C |
|---|---|---|---|---|
| Feed amount (part by mass) | butadiene | 71 | 59 | 100 |
| | styrene | 29 | 41 | 0 |
| Bonding content (wt %) | styrene content | 24.0 | 35.5 | 0.0 |
| Mooney viscosity (ML₁₊₄, 100°C) | | 49 | 51 | 50 |
| Concentration of copolymer (%) | | 20 | 20 | 20 |

### (3) Production of master batch

The SBR (BR) latex obtained in the above item (2) is blended with alumina sol shown in Table 15 at a blending ratio shown in Table 16, stirred with a mechanical stirrer for 30 minutes, and neutralized with a diluted sulfuric acid. Then, a master batch is obtained by drying through a drum drier having a surface temperature of 130°C to remove water.

**Table 15**

| Commercially available grade name | Manufacturer | Particle size (mm) | Specific surface area (m²/g) | | Al₂O₃ (%) | pH |
|---|---|---|---|---|---|---|
| Alumina sol-200 | Nissan Chemical Industries, Ltd. | 100x10 | 300 | - | 10.8 | 4.7 |
| Alumina sol-520 | Nissan Chemical Industries, Ltd. | 15 | 200 | - | 20.5 | 4.0 |

**Table 16**

| Master batch sample | Colloidal solution used, amount (g) | | Latex, amount (g) | | | Al₂O₃ (phr) (g) |
|---|---|---|---|---|---|---|
| j | Alumina sol-200 | 463.0 | A | 500 | - | 50 |
| k | Alumina sol-520 | 243.9 | A | 500 | - | 50 |

### Examples 176-177 and Comparative Examples

Rubber compositions are prepared according to compounding recipes shown in Table 17 by using master batches j+k obtained in the above item (3) with respect to examples and rubbery polymers A-C obtained in the above item (2) with respect to comparative examples. With respect to the resulting rubber compositions, a Mooney viscosity (comp ML₁₊₄(100°C)) is measured, while tensile properties, low heat build-up property and rebound resilience are measured with respect to vulcanized rubbers to obtain results as shown in Table 18.

**Table 17-1**

| | | | Compounding recipe 1 |
|---|---|---|---|
| Stage | first milling | master batch SBR prepared | 150(100) |
| | | carbon black | 0 |
| | | silica | 0(50) |
| | | aromatic oil | 10 |
| | | stearic acid | 2 |
| | | silane coupling agent Si69 | 5 |
| | | 6C | 1 |
| Stage | final | ZnO | 3 |
| | | DPG | 1 |
| | | DM | 1 |
| | | NS | 1 |
| | | sulfur | 1.5 |

**Table 17-2**

| | | | Compounding recipe 2 | Compounding recipe 3 | Compounding recipe 4 |
|---|---|---|---|---|---|
| Stage | first milling | master batch SBR prepared | 125(100) | 125(100) | 100(80) |
| | | NR | 0 | 0 | 20 |
| | | carbon black | 25 | 25 | 25 |
| | | silica | 0(25) | 0(25) | 5(25) |
| | | silane coupling agent Si69 | 0 | 2.5 | 2.5 |
| | | aromatic oil | 10 | 10 | 10 |
| | | stearic acid | | | 2 |
| | | 6C | | | 1 |
| Stage | final | ZnO | | | 3 |
| | | DPG | 0.8 | 0.8 | 0.8 |
| | | DM | 1 | 1 | 1 |
| | | NS | | | 1 |
| | | sulfur | 2.5 | 1.5 | 1.5 |

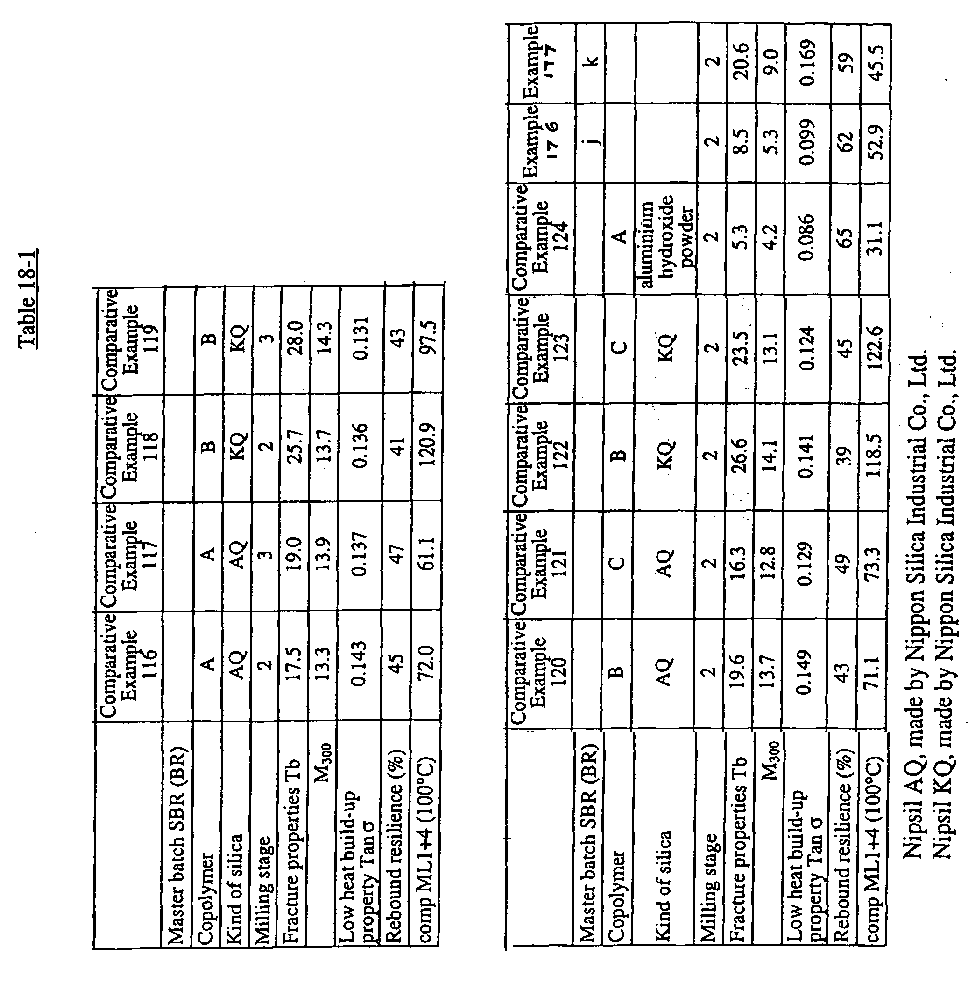

According to the invention, the dispersibility of the inorganic compound into the diene-based rubber can be considerably improved by using a master batch obtained by mixing an aqueous dispersion of a diene-based rubber with an aqueous dispersion of an inorganic compound.

Next, an embodiment using fine particles of aluminium hydroxide having a gibbsite structure as an inorganic compound below:

The diene-based rubbers (oil extension and non-oil extension) used in the following examples and comparative examples are shown in Table 19. They correspond to Tables 1 and 2.

**Table 19**

| | St (%) | Third monomer | Oil extending amount (phr) |
|---|---|---|---|
| Polymer A | 35 | - | 37.5 |
| Polymer B | 35 | hydroxyethyl methacrylate | 37.5 |
| Polymer C | 35 | diethylaminoethyl methacrylate | 37.5 |
| Polymer E | 35 | acrylonitrile | 37.5 |
| Polymer G | 35 | itaconic acid | 37.5 |
| Polymer K | 23.5 | - | 0 |
| Polymer L | 23.5 | hydroxyethyl methacrylate | 0 |
| Polymer N | 23.5 | acrylonitrile | 0 |

As the inorganic compound, aluminium hydroxide (Higilite H-43M, made by Showa Denko Co., Ltd. particle size: 0.72 µm, BET surface area: 6.4 m²/g) is pulverized by using a planetary ball mill to obtain fine particles having a particle size: 0.38 µm and a BET surface area: 12.1 m²/g. 40 g of the fine particles are added with 160 g of distilled water in a colloid mill to form a slurry. Also the fine particles are directly milled in the compounding without forming the slurry in the comparative examples.

Moreover, the particle size is determined by the following method for the measurement through a centrifugal settlement analysis. Measuring apparatus: super-fine particle size analytical meter through highspeed disc centrifugal process (name of measuring apparatus: BI-DIP, made by BROOKHAVEN INSTRUMENTS CORPORATION) Measuring method: A sample is added with a small amount of a surfactant and mixed with an aqueous solution of 20 volume% ethanol to form a dispersion having a sample concentration of 200 mg/l, which is sufficiently dispersed in a super-sonic homogenizer to obtain a specimen. After a revolution number of the apparatus is set to 8,000 rpm and a spinning solution (pure water, 24°C) is added, 0.5 ml of a specimen dispersion is poured to start measurement. A weight average diameter (Dw) of a coagulate calculated by a photoelectric settlement method is rendered into a value of particle size. Examples 199-209, Comparative Examples 133-143

Rubber compositions are prepared according to compounding recipes A, B, D shown in Table 20 by using the polymer shown in Table 19, and the aforementioned slurry of fine particles of aluminium hydroxide having the gibbsite structure with respect to the examples or by compounding aluminium hydroxide (Higilite H-43M) or its finely pulverized product as it is with respect to the comparative examples, and then the tensile strength and wear resistance are measured to obtain results shown in Tables 21 to 23. Moreover, the wear resistance is represented by an index on the basis that Comparative Examples 1, 41 and 86 are used as a control, respectively.

As seen from Tables 21 to 23, when aluminium hydroxide having the gibbsite structure is finely pulverized, the reinforcing property is improved, and further when the aqueous dispersion is used to form the composite, the dispersibility is improved, and hence the tensile strength and wear resistance are considerably improved as compared with those of the respective comparative example.

**Table 20**

| Unit: part by mass | | | | |
|---|---|---|---|---|
| Milling stage | Compounding recipe | A | B | D |
| 1 st | oil-extended SBR | 137.5 | | 137.5 |
| | non-oil extended SBR | | 100 | |
| | N339 (Seast KH) | 60 | 40 | 30 |
| | Nipsil AQ | | | 30 |
| | aluminium hydroxide | 30 | 20 | 30 |
| | aromatic oil | | 10 | |
| | stearic acid | 2 | 2 | 2 |
| | 6C | 1 | 1 | 1 |
| | Si69 | | | 3 |
| 2nd | ZnO | 3 | 3 | 3 |
| | DPG | 0.8 | 0.8 | 0.8 |
| | DM | 1 | 1 | 1 |
| | NS | 1 | 1 | 1 |
| | sulfur | 1.5 | 1.5 | 1.5 |

**Table 21**

| Compounding recipe A | | | | | |
|---|---|---|---|---|---|
| Inorganic filler | Aluminium hydroxide (gibbsite) (fine particle size) | | | | |
| Blending method | DRY | | | | |
| | Comparative Example 133 | Comparative Example 134 | Comparative Example 135 | Comparative Example 136 | Comparative Example 137 |
| Polymer | A | B | C | E | G |
| Tb | 21.5 | 22.9 | 22.4 | 22.5 | 22.3 |
| Wear resistance | 113 | 124 | 120 | 127 | 119 |
| Blending method | Aqueous dispersion | | | | |
| | Example 199 | Example 200 | Example 201 | Example 202 | Example 203 |
| Polymer | A | B | C | E | G |
| Tb | 24.0 | 25.1 | 24.6 | 24.9 | 24.5 |
| Wear resistance | 130 | 145 | 138 | 148 | 137 |

**Table 22**

| Compounding recipe B | | | | | | |
|---|---|---|---|---|---|---|
| Inorganic filler | Aluminium hydroxide (gibbsite) (fine particle size) | | | | | |
| Blending method | DRY | | | Aqueous dispersion | | |
| | Comparative Example 138 | Comparative Example 139 | Comparative Example 140 | Example 204 | Example 205 | Example 206 |
| Polymer | K | L | N | K | L | N |
| Tb | 23.0 | 24.8 | 24.3 | 25.1 | 26.8 | 26.5 |
| Wear resistance | 109 | 125 | 120 | 130 | 14.1 | 144 |

**Table 23**

| Compounding recipe D | | | | | | |
|---|---|---|---|---|---|---|
| Inorganic filler | Aluminium hydroxide (gibbsite) (fine particle size) | | | | | |
| Blending method | DRY | | | Aqueous dispersion | | |
| | Comparative Example 141 | Comparative Example 142 | Comparative Example 143 | Example 207 | Example 208 | Example 209 |
| Polymer | A | B | E | A | B | E |
| Tb | 22.9 | 24.5 | 24.1 | 25.0 | 26.5 | 26.3 |
| Wear resistance | 108 | 112 | 133 | 131 | 146 | 150 |

In the diene-based rubber-inorganic compound composite material and/or rubber composition according to the invention, the dispersibility of the inorganic compound into the diene-based rubber is excellent, so that there can be provided a vulcanized rubber (rubber article) having improved rubber properties such as wear resistance, tensile strength and the like. Particularly, when using an aqueous solution of an inorganic salt or a solution of an organometallic compound capable of forming the inorganic compound, the dispersibility is particularly improved, and hence there can be provided a rubber composition having excellent rubber properties such as wear resistance, tensile strength and the like.

## Claims

1. A method of producing a diene-based rubber-inorganic compound composite material, comprising a step of:
mixing an aqueous dispersion of a diene-based rubber with an aqueous dispersion of an inorganic compound selected from the group consisting of alumina, alumina monohydrate, aluminium hydroxide, magnesium oxide, magnesium hydroxide, aluminium magnesium oxide, titanium white, and titanium black; or with an aqueous solution of an inorganic salt capable of forming said inorganic compound; or with a solution of an organometallic compound capable of forming said inorganic compound; so that the diene-based rubber in an aqueous dispersed state is mixed with the inorganic compound in an aqueous dispersed state.

2. A method as claimed in claim 1, wherein the aqueous solution of the inorganic compound is prepared by adding an acid or an alkali to an aqueous solution of an inorganic salt capable of forming said inorganic compound.

3. A method as claimed in claim 2, wherein the inorganic salt is at least one selected from metal salts and oxo acid salts of metals.

4. A method as claimed in claim 3, wherein the metal constituting the metal salt or oxo acid salt of metal is aluminium.

5. A method as claimed in claim 1, wherein the aqueous solution of the inorganic compound is prepared by adding water or an acid or an alkali to an aqueous solution of an organometallic compound capable of forming said inorganic compound.

6. A method as claimed in claim 1, wherein the aqueous solution of the inorganic compound is prepared by adding an alkali to a metal which is aluminium, magnesium or titanium.

7. A method as claimed in any of claims 1 to 6, wherein a diene-based rubber latex synthesized by an emulsion polymerization is used as the aqueous solution of the diene-based rubber.

8. A method as claimed in any of claims 1 to 6, wherein the diene-based rubber is a diene-based rubber containing a polar group with a heteroatom.

9. A method as claimed in claim 8, wherein the polar group is a hydroxyl group, an oxy group, an alkoxysilyl group, an epoxy group, a carboxyl group, a carbonyl group, an oxycarbonyl group, a sulfide group, a disulfide group, a sulfonyl group, a sulfinyl group, a thiocarbonyl group, an imino group, an amino group, a nitrile group, an ammonium group, an imido group, an amido group, a hydrazo group, an azo group or a diazo group.

10. A method as claimed in any of claims 1 to 9, which further comprises a step of co-coagulating the diene-based rubber and the inorganic compound with an electrolyte containing a metal salt and filtering and drying.

11. A rubber composition comprising a diene-based rubber-inorganic compound composite material prepared by the method as claimed in any of claims 1 to 10, and a cross-linking agent.

12. A rubber composition as claimed in claim 11, wherein the diene-based rubber-inorganic compound composite material is included in an amount of not less than 10 mass%, and the crosslinking agent is a vulcanizing agent, and further a reinforcing filler is contained.

13. A rubber composition as claimed in claim 12, wherein the reinforcing filler contains at least one of carbon black and silica.

14. A rubber composition as claimed in any of claims 11 to 13, which further contains a silane coupling agent.

15. A rubber composition as claimed in any of claims 11 to 14, which further contains an aliphatic acid.

## Patentansprüche

1. Verfahren zum Herstellen eines Compositematerials von auf Dien basierendem Kautschuk/anorganischer Verbindung, umfassend einen Schritt von:
Mischen einer wässrigen Dispersion eines auf Dien basierenden Kautschukes mit einer wässrigen Dispersion einer anorganischen Verbindung, die ausgewählt ist aus der Gruppe, bestehend aus: Aluminiumoxid, Aluminiumoxidmonohydrat, Aluminiumhydroxid, Magnesiumoxid, Magnesiumhydroxid, Aluminium-Magnesiumoxid, Titanweiß und Titanschwarz; oder mit einer wässrigen Lösung eines anorganischen Salzes, das zur Erzeugung der anorganischen Verbindung in der Lage ist; oder mit einer Lösung einer metallorganischen Verbindung, die zur Erzeugung der anorganischen Verbindung in der Lage ist; so dass der auf Dien basierende Kautschuk in einem wässrigen, dispergierten Zustand mit der anorganischen Verbindung in einem wässrigen, dispergierten Zustand dispergiert wird.

2. Verfahren nach Anspruch 1, bei welchem die wässrige Lösung der anorganischen Verbindung hergestellt wird durch Zugabe einer Säure oder einer Lauge zu einer wässrigen Lösung eines anorganischen Salzes, das zur Erzeugung der anorganischen Verbindung in der Lage ist.

3. Verfahren nach Anspruch 2, bei welchem das anorganische Salz mindestens ein solches ist, das ausgewählt ist aus Metallsalzen und Metallsalzen einer Oxosäure.

4. Verfahren nach Anspruch 3, bei welchem das Metall, aus dem das Metallsalz oder das Metallsalz der Oxosäure besteht, Aluminium ist.

5. Verfahren nach Anspruch 1, bei welchem die wässrige Lösung der anorganischen Verbindung hergestellt wird durch Zugabe von Wasser oder einer Säure oder einer Lauge zu einer wässrigen Lösung einer metallorganischen Verbindung, die zur Erzeugung der anorganischen Verbindung in der Lage ist.

6. Verfahren nach Anspruch 1, bei welchem die wässrige Lösung der anorganischen Verbindung hergestellt wird durch Zugabe einer Lauge zu einem Metall, das Aluminium ist, Magnesium oder Titan.

7. Verfahren nach einem der Ansprüche 1 bis 6, bei welchem eine auf Dien basierende Kautschuklatex, die mit Hilfe einer Emulsionspolymerisation synthetisch hergestellt wird, als die wässrige Lösung des auf Dien basierenden Kautschukes verwendet wird.

8. Verfahren nach einem der Ansprüche 1 bis 6, bei welchem der auf Dien basierende Kautschuk ein auf Dien basierender Kautschuk ist, der eine polare Gruppe mit einem Heteroatom enthält.

9. Verfahren nach Anspruch 8, bei welchem die polare Gruppe eine Hydroxyl-Gruppe ist, eine Oxy-Gruppe, eine Alkoxysilyl-Gruppe, eine Epoxy-Gruppe, eine Carboxyl-Gruppe, eine Carbonyl-Gruppe, eine OxycarbonylGruppe, eine Sulfid-Gruppe, eine Disulfid-Gruppe, eine Sulfonyl-Gruppe, eine Sulfinyl-Gruppe, eine ThiocarbonylGruppe, eine Imino-Gruppe, eine Amino-Gruppe, eine Nitril-Gruppe, eine Ammonium-Gruppe, eine Imido-Gruppe, eine Amido-Gruppe, eine Hydrazo-Gruppe, eine Azo-Gruppe oder eine Diazo-Gruppe.

10. Verfahren nach einem der Ansprüche 1 bis 9, ferner umfassend einen Schritt des Co-Koagulierens des auf Dien basierenden Kautschukes und der anorganischen Verbindung mit einem Elektrolyten, der ein Metallsalz enthält, und Filtrieren und Trocknen.

11. Kautschukzusammensetzung, die ein Compositematerial aus auf Dien basierendem Kautschuk/anorganischer Verbindung aufweist, das mit Hilfe des Verfahrens nach einem der Ansprüche 1 bis 10 hergestellt ist, und die ein Vernetzungsmittel aufweist.

12. Kautschukzusammensetzung nach Anspruch 11, wobei das Compositematerial aus auf Dien basierendem Kautschuk/anorganischer Verbindung in einer Menge von nicht weniger als 10 Masseprozent einbezogen ist und das Vernetzungsmittel ein Vulkanisiermittel ist und ferner ein verstärkender Füllstoff enthalten ist.

13. Kautschukzusammensetzung nach Anspruch 12, wobei der verstärkende Füllstoff mindestens Ruß und Siliciumdioxid enthält.

14. Kautschukzusammensetzung nach einem der Ansprüche 11 bis 13, die ferner einen Silan-Haftvermittler enthält.

15. Kautschukzusammensetzung nach einem der Ansprüche 11 bis 14, die ferner eine aliphatische Säure enthält.

## Revendications

1. Procédé de production d'un matériau composite de caoutchouc à base de diène-composé inorganique, comprenant une étape de :
mélange d'une dispersion aqueuse d'un caoutchouc à base de diène avec une dispersion aqueuse d'un composé inorganique choisi parmi le groupe constitué de l'alumine, de l'alumine monohydratée, de l'hydroxyde d'aluminium, de l'oxyde de magnésium, de l'hydroxyde de magnésium, de l'oxyde d'aluminium magnésium, du blanc de titane, et du noir de titane ; ou avec une solution aqueuse d'un sel inorganique capable de former ledit composé inorganique ; ou avec une solution d'un composé organométallique capable de former ledit composé inorganique ; de sorte que le caoutchouc à base de diène dans un état dispersé aqueux est mélangé avec le composé inorganique dans un état dispersé aqueux.

2. Procédé tel que revendiqué selon la revendication 1, dans lequel la solution aqueuse du composé inorganique est préparée en ajoutant un acide ou un agent alcalin à une solution aqueuse d'un sel inorganique capable de former ledit composé inorganique.

3. Procédé tel que revendiqué selon la revendication 2, dans lequel le sel inorganique est au moins un sel choisi parmi les sels métalliques et les sels d'acide oxo de métaux.

4. Procédé selon la revendication 3, dans lequel le métal constituant le sel métallique ou le sel d'acide oxo de métal est l'aluminium.

5. Procédé tel que revendiqué selon la revendication 1, dans lequel la solution aqueuse du composé inorganique est préparée en ajoutant de l'eau ou un acide ou un agent alcalin à une solution aqueuse d'un composé organométallique capable de former ledit composé inorganique.

6. Procédé tel que revendiqué selon la revendication 1, dans lequel la solution aqueuse du composé inorganique est préparée en ajoutant un agent alcalin à un métal qui est l'aluminium, le magnésium ou le titane.

7. Procédé tel que revendiqué selon l'une quelconque des revendications 1 à 6, dans lequel un latex de caoutchouc à base de diène synthétisé par une polymérisation en émulsion est utilisé comme solution aqueuse du caoutchouc à base de diène.

8. Procédé tel que revendiqué dans l'une quelconque des revendications 1 à 6, dans lequel le caoutchouc à base de diène est un caoutchouc à base de diène contenant un groupe polaire avec un hétéroatome.

9. Procédé tel que revendiqué dans la revendication 8, dans lequel le groupe polaire est un groupe hydroxyle, un groupe oxy, un groupe alcoxysilyle, un groupe époxy, un groupe carboxyle, un groupe carbonyle, un groupe oxycarbonyle, un groupe sulfure, un groupe disulfure, un groupe sulfonyle, un groupe sulfinyle, un groupe thiocarbonyle, un groupe imino, un groupe amino, un groupe nitrile, un groupe ammonium, un groupe imido, un groupe amido, un groupe hydrazo, un groupe azo ou un groupe diazo.

10. Procédé tel que revendiqué dans l'une quelconque des revendications 1 à 9, qui comprend en outre une étape de co-coagulation du caoutchouc à base de diène et le composé inorganique avec un électrolyte contenant un sel métallique et la filtration et le séchage.

11. Composition de caoutchouc comprenant un matériau composite de caoutchouc à base de diène-composé inorganique préparé par le procédé tel que revendiqué selon l'une quelconque des revendications 1 à 10, et un agent de réticulation.

12. Composition de caoutchouc telle que revendiquée selon la revendication 11, dans laquelle le matériau composite de caoutchouc à base de diène-composé inorganique est inclus en une quantité non inférieure à 10% en masse, et l'agent de réticulation est un agent de vulcanisation, et en outre une charge de renforcement est contenue.

13. Composition de caoutchouc telle que revendiquée selon la revendication 12, dans laquelle la charge de renforcement contient au moins l'un parmi du noir de carbone et de la silice.

14. Composition de caoutchouc telle que revendiquée selon l'une quelconque des revendications 11 à 13, qui contient en outre un agent de couplage au silane.

15. Composition de caoutchouc telle que revendiquée selon l'une quelconque des revendications 11 à 14, qui contient en outre un acide aliphatique.
